# FASCICULE DE BREVET EUROPEEN

(11) **EP 0 784 266 B1**
(45) Date de publication et mention de la délivrance du brevet: **10.10.2001**
(21) Numéro de dépôt: 96402551.4
(22) Date de dépôt: 27.11.1996
(51) Int. Cl.: G06F 9/44

(54) **Procédé de manipulation de modèles de données utilisés en génie logiciel**
Verfahren zur Bearbeitung von Datenmodellen für die Software-Entwicklung
Method for processing datamodels used in software engineering

(30) Priorité: 08.12.1995 FR 9514576
(43) Date de publication de la demande: 16.07.1997
(73) Titulaire: BULL S.A., 78430 Louveciennes (FR)
(72) Inventeur: Carosso, Robert, Chelmsford, MA 01824 (US); Strassberger, Edward, Billerica MA 01821 (US); Kiso, James, Acton, MA 01720 (US); Leprince, Elisabeth, 75014 Paris (FR)
(74) Mandataire: Debay, Yves

(56) Documents cités:
- EP-A- 0 495 279
- IEEE SOFTWARE, JULY 1988, USA, vol. 5, no. 4, ISSN 0740-7459, pages 36-42, XP002014686 KOSCHMANN T ET AL: "Bridging the gap between object-oriented and logic programming"

## Description

La présente invention concerne un procédé de manipulation de modèles de données pour le transfert desdits modèles entre une pluralité d'outils de génie logiciel et l'application à un dit modèle, de règles de transformation, la transformation de modèles de données étant réalisée au moyen de passerelles permettant de convertir le format d'un outil dans le format d'un autre outil en passant par un format intermédiaire neutre et unique.

De manière générale, la volonté commune et profonde des utilisateurs ou des concepteurs est de rechercher l'interopérabilité entre outils logiciels pour permettre d'échanger, sous forme de modèles de données, des informations relatives au développement d'applications entre des outils de développement hétérogènes utilisés dans leur environnement propre. En particulier, le transfert de modèles de données peut être d'une aide précieuse pour permettre par exemple, la migration d'applications entre outils de génie logiciel ou entre un outil de génie logiciel existant et un nouvel outil de développement d'un modèle client/serveur, ou bien la gestion d'informations de développement, sous forme de modèles de données, par exemple dans un référentiel (appelé "repository" par l'homme de métier). Ainsi, et ceci sachant que l'utilisation de tels outils est de plus en plus courante, il peut être désiré administrer, récupérer ou transférer des fichiers d'export d'un ou vers un ou plusieurs outils de génie logiciel du marché permettant de faire de la conception ou de l'analyse de modèles d'information. Cependant, dans l'état actuel des choses, divers inconvénients sont présentés. En effet, chaque outil a son propre formalisme interne et une manière privée ou spécifique de représenter les objets, de stocker les informations, etc., si bien que deux outils ne peuvent communiquer ou s'échanger directement des informations.

La solution qui était encore récemment utilisée, pour passer outre ces inconvénients, consistait à développer pour chaque outil et d'outil à outil, ce que l'homme du métier appelle des "passerelles" c'est-à-dire des interfaces dont le rôle est de permettre de convertir le format d'un outil dans le format d'un autre outil. De la sorte, pour autoriser le dialogue entre outils, il devait être développé pour chaque outil un nombre de passerelles égal au nombre d'outils avec lesquels il était désiré communiquer et lorsqu'un nouvel outil apparaissait il était nécessaire de développer pour chaque outil une passerelle spécifique pour autoriser le dialogue avec le nouvel outil. A l'évidence, cette solution présente un inconvénient principal qui est qu'elle nécessite de créer autant de passerelles qu'il y a de combinaisons d'outils possibles, ce qui en terme de coût et de temps de développement devient très rapidement prohibitif. En effet, à titre d'exemple et ceci même en prenant un nombre d'outils relativement restreint, pour permettre le dialogue entre, respectivement, 4, 5 ou 6 outils, il faudrait nécessairement développer, respectivement, 6, 10 ou 15 passerelles.

Pour remédier au moins partiellement à cet inconvénient, certains ont imaginé une solution qui consistait à développer des passerelles également spécifiques mais prévues pour permettre de convertir le format d'un outil dans le format d'un autre outil en passant par un format intermédiaire commun neutre et donc unique en créant un modèle d'information pivot neutre servant de noyau d'échange. Cette notion de représentation neutre utilisant ce modèle d'information pivot, où toutes les passerelles passent par ce noyau d'échange, permet de réduire significativement le nombre de passerelles et ceci d'autant plus que le nombre d'outils à mettre en communication est grand. Ainsi, en reprenant l'exemple précédent, pour permettre le dialogue, entre, respectivement, 4, 5 ou 6 outils, il sera dans ce cas nécessaire de ne développer que, respectivement, 4, 5 ou 6 passerelles, une passerelle par outil pour accéder audit noyau d'échange et convertir le format dudit outil dans le format intermédiaire commun. Avec ce type de solution, pour assurer une portabilité aisée, il a été opté pour une approche propriétaire dans laquelle sont développés des langages spécifiques, donc écrits et interprétés pour remplir cette fonctionnalité, qui sont compacts, de contrôle facile et fonctionnellement adaptés. En effet, dans ce monde fermé le portage est assez significativement simplifié puisqu'un seul programme est à interpréter. Cependant, cette solution bien qu'avantageuse comporte également des inconvénients. Un premier inconvénient est inhérent au fait qu'un langage interprété est assez peu rapide, l'interprète devant analyser ledit langage pour pouvoir ensuite effectuer les actions décrites. Un second important inconvénient à utiliser un tel langage propriétaire est qu'il ne permet pas d'exploiter la notion de composant réutilisable. En effet, lorsqu'il est désiré développer une nouvelle passerelle, il est nécessaire de réécrire tout le code dans ce langage spécifique. Par ailleurs, de tels langages souffrent généralement d'un environnement de développement très pauvre (pas de bibliothèques de fonctions réutilisables, pas d'outil de mise au point ou "débogueur", etc.).

La présente invention a pour but de remédier aux divers inconvénients des différentes méthodes de l'art antérieur connues et propose un procédé de manipulation de modèles de données qui, de par le choix judicieux du langage utilisé apporte une importante flexibilité et une grande rapidité d"exécution, est aisément extensible et permet d'exploiter la notion de composant réutilisable tout en offrant un haut niveau de portabilité et de performances ainsi qu'un faible coût.

Pour cela, le procédé de manipulation de modèles de données mentionné dans le préambule est remarquable en ce que, l'élaboration des passerelles est, selon une approche dite orientée objet, réalisée à partir d'un langage exécuté, les passerelles étant des exécutables permettant la transformation d'un modèle de données en plusieurs étapes activées successivement, de manière systématique ou conditionnelle, grâce à un langage de commande décrivant une logique d'enchaînement dynamique des étapes, l'enchaînement étant une procédure paramétrée et nommée, chaque étape étant un exécutable dont le code est développé à partir d'un ensemble de classes réutilisables et l'activation d'une procédure nécessitant simplement de fournir le nom et les paramètres de la procédure correspondante.

Ainsi, selon l'idée de l'invention, il a été décidé d'utiliser un langage exécuté en adoptant une approche orientée objet et ceci malgré un préjugé défavorable, les langages propriétaires développés de manière spécifique étant considérés autoriser une portabilité aisée et favoriser une stricte adaptation fonctionnelle ressentie comme nécessaire. Contrairement à ce préjugé et donc aux approches antérieures connues, il a donc été décidé d'utiliser un langage standard connu plus flexible, de préférence directement compilé et dont la gestion mémoire est plus fine et plus efficace, par exemple comme le langage C++. En outre, un tel langage présente un très bon niveau d'abstraction et, employé avec des bibliothèques adéquates, il permet d'une part, d'augmenter l'efficacité et la rapidité et d'autre part, d'apporter une avantageuse généricité puisqu'une même structure peut être réutilisée dans des contextes différents, les facteurs de réutilisabilité et de compatibilité étant ainsi de plus favorisés. Autre avantage, ce type de langage peut être aisément mis au point à l'aide d'un débogueur correspondant, ce qui permet de diminuer encore les temps de développement des passerelles. Enfin, un tel choix d'un langage standard pour lequel il existe de très nombreux produits et utilisateurs ne peut qu'offrir l'assurance d'un environnement de qualité.

De cette manière, pour réaliser des transferts d'un outil à un autre ou d'un modèle à un autre, il existe plusieurs composants conçus pour permettre d'exécuter le code d'une passerelle, chaque passerelle étant en fait développée comme un programme orienté objet construit à l'aide de bibliothèques de classes réutilisables. Ces classes vont servir à élaborer différentes passerelles sachant qu'une passerelle peut être construite en plusieurs phases, par exemple, une phase de décodage physique des fichiers par reconnaissance des codes et donc des éléments syntaxiques dans le fichier d'import, puis une phase de codage de la transformation dans laquelle sont trouvés ou créés les correspondants des éléments syntaxiques dans le modèle d'information neutre et éventuellement une phase de contrôle d'intégrité. Chacune de ces phases constitue un module réutilisable et l'ensemble des modules peut être enchaîné dynamiquement non comme un programme mais selon une suite de procédures à appliquer. Pour cela, la liste des modules à enchaîner dynamiquement est décrite à l'aide d'un fichier de définition d'opérations (appelé également "operation definition file" par l'homme du métier), alors qu'un gestionnaire de tâches (appelé aussi 'task manager" par l'homme du métier) va chercher, parmi les exécutables contenant les procédures réutilisables, lesdits modules pour les exécuter et ainsi construire la passerelle en tenant compte des paramètres de configuration pour l'adaptation de ladite passerelle. Toutes ces informations peuvent être stockées dans un espace persistant, par exemple un disque, tandis que les résultats intermédiaires sont gardés temporairement en mémoire. En outre, le gestionnaire de tâches permet également de sélectionner l'ordre d'exécution optimal lorsqu'il existe simultanément plus d'une procédure et/ou d'un exécutable qui conviennent. En effet, il peut être, par exemple disposé de plusieurs copies de différentes procédures, dans ce cas, le gestionnaire de tâches sélectionne automatiquement la séquence de modules et la classe de procédure qui minimise le chargement des exécutables ce qui permet d'optimiser la durée d'exécution.

Le procédé de manipulation de modèles de données active donc des composants réutilisables qui permettent de développer rapidement des passerelles. De manière remarquable, pour le développement d'une passerelle, il est créé une classe réutilisable permettant de représenter les modèles et méta-modèles stockés en mémoire dans un référentiel ou dans un fichier externe en utilisant une allocation dynamique des objets de modélisation, les objets de cette classe intégrant un ensemble de structures de mémoire et fournissant des fonctions pour manipuler les données d'un modèle chargé en mémoire.

De manière générale, les données peuvent être stockées sous différentes formes, formats et emplacements. De préférence et de sorte à simplifier les manipulations, les mécanismes suivants sont ici privilégiés:
- un mécanisme permettant de lire, écrire et analyser les fichiers d'export d'outil (ou "tool export file") qui sont des fichiers de données utilisateur générés par un outil dans un format propriétaire,
- des mécanismes qui correspondent à des objets, par exemple des objets C++, qui encapsulent ou intègrent chacun un ensemble de structures mémoire et fournissent des fonctions pour manipuler des modèles de données chargés à partir de fichiers d'export d'outil et/ou d'un référentiel, la mise en oeuvre de ces objets et les fonctions de manipulation de ces objets constituant une classe réutilisable. De manière préférée, l'organisation des données d'un modèle est basée sur un métamodèle chargé au moment de la création de ces classes, les métamodèles étant chargés au moment de l'exécution à partir de fichiers de textes appelés fichiers de métamodèles. Une telle classe peut être chargée avec un métamodèle d'outil ou peut être chargée avec un métamodèle du modèle d'information neutre, ces deux types d'objets étant utilisés pendant l'exécution de la passerelle,
- un mécanisme appelé fichier de données neutre qui est un fichier de texte contenant des données qui ont été mises en correspondance avec des données du modèle d'information neutre, ce mécanisme étant utilisé pour le transfert des données entre différents exécutables ou pour le stockage permanent sur disque,
- un référentiel dans lequel les données d'un utilisateur peuvent être stockées en utilisant des schémas représentant le modèle d'information neutre, et être gérées par des outils du référentiel (par exemple, gestion des versions, des requêtes, etc.).

Ainsi, avec les passerelles, les données peuvent être déplacées et manipulées d'un emplacement ou d'un mécanisme de stockage à un autre et/ou d'une forme à une autre. Il peut être donné trois exemples de passerelles, les passerelles d'import, d'export ou de transfert. La mise en oeuvre d'une passerelle d'import permet d'extraire des données d'un fichier d'export d'un outil pour les placer dans le référentiel alors que la mise en oeuvre d'une passerelle d'export permet d'extraire des données du référentiel pour créer un fichier d"export d'outil. La mise en oeuvre d'une passerelle de transfert permet elle de récupérer des données directement d'un fichier d'export d'un outil à un autre sans passer par un stockage dans le référentiel. Il y a bien entendu d'autres types d'opérations dont l'objet n'est pas nécessairement de déplacer ou de coder des données mais qui permettent de traiter des données chargées à un instant donné en mémoire. Toutes ces opérations requièrent donc la possibilité de charger des données en mémoire, de les manipuler ainsi que d'écrire les données en les stockant de manière persistante, ces opérations étant réalisables du fait de l'existence des classes réutilisables et des fonctions ici revendiquées. Un certain nombre d'opérations requièrent la création d'objets mutiples et impliquent des conversions ou codages entre divers objets. Par exemple, lorsque des données sont extraites d'un fichier d'export d'outil, un exécutable permet d'analyser syntaxiquement ce fichier et de créer un objet qui contient les données du fichier d'export mais structurées de manière à correspondre au métamodèle de l'outil. Ensuite, les données spécifiques de l'outil sont converties en données générales selon le modèle d'information neutre qui implique la conversion de cet objet en un objet correspondant au modèle d'information neutre. Les données ainsi stockées peuvent être traitées et éventuellement sauvegardées dans un fichier de données neutre (si les données doivent être communiquées à un autre exécutable) ou stockées dans le référentiel.

Par conséquent, les passerelles permettent d'accéder aux modèles de données et aux définitions de métamodèles stockés en mémoire, les objets des modèles étant dynamiquement alloués en mémoire. Après chargement du métamodèle, un modèle est construit en utilisant le gabarit du métamodèle. Les ensembles de modèles ont une structure similaire à celle des ensembles de métamodèles, ce qui autorise de rapides mises en correspondance entre objets et entre définitions des propriétés et leurs instances.

Egalement de manière caractéristique, pour le développement d'une passerelle, il est créé une classe réutilisable permettant de coder et décoder différents formats de fichiers d'export d'outils, cette classe encapsulant les enregistrements d'export d'outil et étant utilisée pour décrire les formats d'enregistrement d'un fichier d'import, alors qu'à l'initialisation, tandis que le métamodèle d'un outil est lu à l'aide de la classe de représentation des modèles et métamodèles stockés en mémoire à partir d'un fichier de texte, le code de la passerelle permet de lire le fichier d'export d'outil, d'accéder aux champs propres aux enregistrements et de créer les objets et leurs propriétés en utilisant les fonctions de la classe de représentation des modèles et métamodèles stockés en mémoire.

En effet, les langages de programmation et donc également le langage C++ ne permettent pas de manipuler de manière directe des structures contenant plusieurs champs variables. La solution proposée ici est de mettre en oeuvre des déclarations d'enregistrements sous la forme d'une série de descripteurs de champs. Le programmeur définit des tailles de champs fixes et variables, des codes type d'enregistrement avec pour valeurs des constantes et des valeurs de séparateurs. Dans le code traitement, le programmeur appelle d'abord des fonctions permettant de faire correspondre un enregistrement avec son descripteur puis accède aux champs de l'enregistrement. Pour la création d'un enregistrement du fichier d'export, le programmeur remplit les champs propres à cet enregistrement à partir des données du modèle puis il écrit l'enregistrement dans son entier. La description de l'enregistrement comporte, pour chaque champ, le nom, le type et la taille de l'information au moment de l'exécution. L'information de description de même que les données peuvent être affichées pour la mise au point.

Cette classe ainsi revendiquée permet de définir des macros pour la construction des descripteurs d'enregistrement et des prototypes de fonctions pour faire correspondre un registre avec une description d'enregistrement, en fournissant des données à partir d'un champ dans un enregistrement, en fixant des données dans un champ d'enregistrement et en fournissant un enregistrement complet pour l'extraction.

Cette classe réutilisable permet ainsi avantageusement de réaliser différents traitements de différents fichiers d'export d'outil, ces fichiers étant lus et écrits au moyen de composants de la passerelle.

Enfin et également de manière remarquable, pour le développement d'une passerelle, il est créé une classe réutilisable de manipulation de chaînes de caractères qui permet de prendre en charge les affectations, les concaténations et les opérateurs de comparaison avec les fonctions de sous-chaîne et de réaffectation dynamique de mémoire tout en conservant la compatibilité avec les chaînes de caractères d'un langage de type C.

De cette manière, cette classe réutilisable fournit une solution technique pratique en proposant un type de données spécifique des chaînes de caractères qui offre un comportement comparable à celui des types de données prédéfinis en langage C. Cette classe présente aussi une caractéristique de grande importance, car elle permet d'interdire toute perte d'information généralement associée à des pertes de blocs de mémoire.

La description suivante en regard des dessins annexés, le tout donné à titre d'exemple non limitatif, fera bien comprendre comment et dans quel environnement l'invention peut être réalisée.

La figure 1 donne un exemple d'interopérabilité selon la présente invention entre divers outils de génie logiciel.

La figure 2 représente une architecture dans laquelle apparaissent divers composants permettant de mettre en oeuvre l'invention.

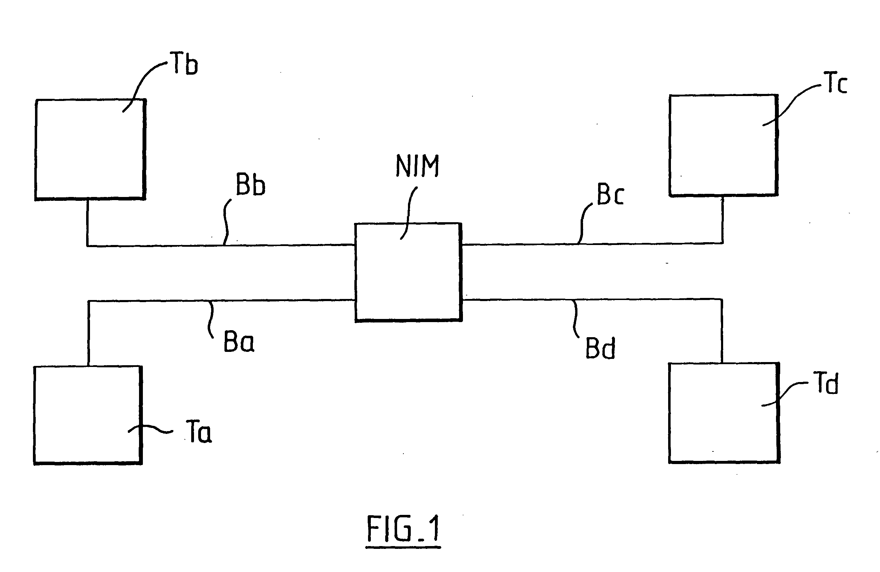

Sur la figure 1 est présentée de manière schématique et en conformité avec l'idée de l'invention la possible et avantageuse interopérabilité dans un ensemble d'outils Ta, Tb, Tc, Td,..., de génie logiciel, lesdits outils s'échangeant, sous forme de modèles de données, des informations, par exemple, relatives au développement d'applications. Les outils Ta, Tb, Tc et Td sont des outils de développement hétérogènes utilisés, chacun, dans un environnement propre et avec son propre dictionnaire. La transformation de modèles de données entre ces quatre outils est réalisée au moyen de passerelles telles que Ba, Bb, Bc et Bd qui permettent de convertir le format propre d'un des outils Ta, Tb, Tc, Td dans le format propre d'un autre desdits outils en passant par un format intermédiaire neutre et unique, le modèle d'information neutre NIM. Plus précisément, les informations échangées transitent par les fichiers d'export desdits outils qui ainsi transmettent ou recoivent les données vers le ou du modèle NIM qui est par conséquent le modèle pivot. Les données qui instancient le modèle d'information neutre NIM sont stockées dans une base de données objets appelée référentiel.

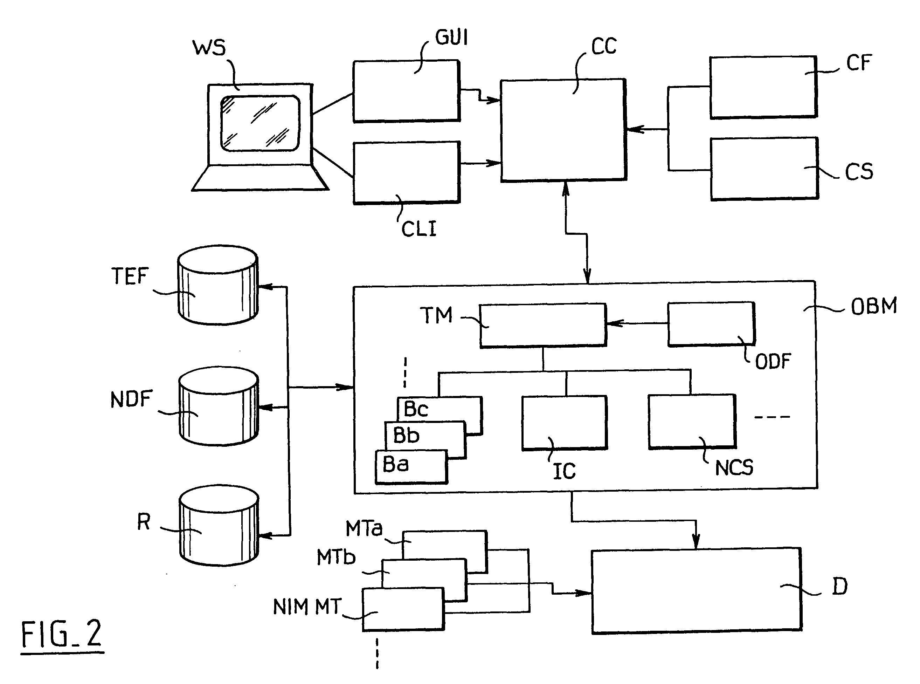

Sur la figure 2 est proposé un exemple d'architecture dans laquelle apparaissent divers composants permettant de mettre en oeuvre l'invention, composants parmi lesquels des interfaces, des contrôleurs, des mécanismes de stockage, des fichiers de configuration, des séquences type de contrôle (scripts dans le langage exécuté selon l'invention). des passerelles ainsi que le référentiel. Cet environnement peut être considéré comme étant une boîte à outils de développement. Toute action de cette boîte à outils est contrôlée par une classe de contrôle CC appelée aussi classe d'interface programmeur, cette classe permet d'organiser l'environnement pour le transfert de données et également d'appeler les procédures adéquates. Les développeurs d'interfaces pour la visualisation sur l'écran d'un poste de travail WS, comme l'interface graphique utilisateur GUI, l'interface de lignes de commande CLI ou tout autre interface, utilisent exclusivement la classe de contrôle CC. Cette classe CC contient les fonctions de l'interface applicative (API) permettant d'appeler les passerelles et de lancer toute commande. Il est ici rappelé d'une part, qu'une passerelle est un mécanisme spécifique pour autoriser le déplacement de données d'un emplacement à un autre et leur manipulation d'une forme à une autre et d'autre part qu'il existe, entre autres, trois types de passerelles, les passerelles d'import, d'export et de transfert. La classe de contrôle CC est paramétrée par les fichiers de configuration CF et les séquences de type contrôle CS (scripts). Les données peuvent être chargées en mémoire sous différentes formes et formats et à des emplacements différents. Quatre mécanismes de stockage peuvent être ainsi utilisés, chacun ayant une utilité propre et possédant son propre jeu de services associés, ce sont les fichiers d'export d'outil TEF, le fichier de données neutre NDF, le référentiel R et un mécanisme D d'allocation dynamique d'objets de modèle. Un fichier d'export d'outil TEF est en fait un fichier de données utilisateur généré par un outil externe dans le format propriétaire dudit outil, ce fichier TEF peut être, selon les moyens de l'invention, lu, écrit et analysé. Un fichier de données neutre NDF qui lui est un fichier de texte contenant le résultat de la modélisation, selon le métamodèle d'information neutre, du modèle importé et initialement structuré selon le métamodèle de l'outil. Ce fichier NDF est une représentation ASCII de cette représentation neutre du modèle. Des services de lecture et d'écriture du fichier de données neutre NDF sont fournis selon l'invention. Un fichier de données neutre permet de transférer des données relatives à des objets C++ d'un exécutable à des objets C++ d'un autre exécutable en évitant toute perte de données. Le référentiel R contient, quant à lui, un schéma permettant de mettre en oeuvre le modèle d'information neutre. Les données d'un utilisateur peuvent être stockées dans le référentiel dans le format du modèle d'information neutre et ensuite gérées et manipulées par des outils du référentiel incluant la gestion des versions, des requêtes, etc., alors que des services sont fournis pour stocker des données dans ou extraire des données du référentiel. Un fichier de données neutre NDF peut aussi être stocké dans le référentiel comme un objet avec son contenu. Le mécanisme D d'allocation dynamique d'objets de modèles est également un point fort de l'invention, il fournit un jeu de classes C++ utilisé pour la représentation de modèles de données de façon totalement générique et dans la manière spécifiée par les données du métamodèle chargées au moment de l'exécution. Un métamodèle est chargé à partir d'un fichier de texte appelé fichier de métamodèle et est stocké comme un objet C++. Les données d'un utilisateur qui sont ensuite stockées comme objets C++, sont mises en correspondance dans le métamodèle associé. Il est à noter que le modèle d'information neutre est un métamodèle prévu pour être suffisament complet pour permettre de capturer la plupart des concepts de tous les métamodèles d'outils. Un objet C++ qui est chargé avec le métamodèle du modèle d'information neutre est en fait un format de stockage central ou pivot à partir duquel peut être généré tout autre format de stockage. Le mécanisme D d'allocation dynamique d'objets contient l'ensemble des classes nécessaires à la mise en oeuvre de l'invention de même qu'il contient tous les métamodèles MTa, MTb,..., NIM MT.

Les quatre mécanismes de stockage, fichiers TEF, fichiers NDF, référentiel R et mécanisme D sont en relation directe avec un mécanisme de passerelles et d'opérations OBM qui est également en relation avec la classe de contrôle CC.

Comme cela a déjà été dit précédemment et de plus en relation avec la figure 2 et en particulier le mécanisme de passerelles et d'opérations OBM, pour réaliser des transferts d'un outil à un autre ou d'un format à un autre, il existe plusieurs composants conçus pour permettre d'exécuter le code d'une passerelle, chaque passerelle étant en fait une opération développée comme un programme orienté objet construit à l'aide de bibliothèques de classes réutilisables. Ces classes servent à élaborer différentes passerelles Ba, Bb, Bc, ...,sachant qu'une passerelle peut être construite en plusieurs phases, par exemple, une phase de décodage physique des fichiers par reconnaissance des codes et donc des éléments syntaxiques dans le fichier d'import, puis une phase de codage de la transformation dans laquelle sont trouvés ou créés les correspondants des éléments syntaxiques dans le modèle d'information neutre et éventuellement une phase de contrôle d'intégrité (mécanisme IC). Chacune de ces phases constitue un module réutilisable et l'ensemble des modules peut être enchaîné dynamiquement non comme un programme mais selon une suite de procédures. Pour cela, la liste des modules à enchaîner dynamiquement est décrite à l'aide d'un fichier de définition d'opérations ODF (appelé également "operation definition file" par l'homme du métier), fichier exploité par un gestionnaire de tâches TM (appelé aussi 'task manager" par l'homme du métier) qui va chercher, parmi les exécutables contenant les procédures réutilisables, lesdits modules pour les exécuter et ainsi construire la passerelle en tenant compte des paramètres de configuration pour l'adaptation de ladite passerelle tout en autorisant, comme cela a été explicité précédemment, une avantageuse réduction de la durée d'exécution. Tous ces paramètres peuvent être stockés dans un espace persistant (CS), tandis que les résultats intermédiaires sont gardés temporairement en mémoire. Le procédé de manipulation de modèles de données active donc des composants réutilisables qui permettent de développer rapidement des passerelles. Des opérations autres que les passerelles peuvent être effectuées telles que des opérations autonomes ("standalone operations") qui sont des opérations dans lesquelles les données ne sont pas obligatoirement déplacées ou converties, par exemple le contrôle d'intégrité IC ou les services de conversion de nommage NCS.

Pour une meilleure appréhension de l'idée de l'invention, il est proposé ci-après quelques définitions et une description de mises en oeuvre possibles mais non limitatives de diverses classes revendiquées selon la présente invention.

Tout d'abord, il est proposé des définitions de classes relativement à l'organisation des "scripts" et aux configurations, se rappelant qu'un composant d'une application est un programme qui fournit une interface à un utilisateur de l'environnement de l'invention, interface qui peut être de tout type. L'application instancie un objet de la classe de contrôle (TsControl Class) au nom de l'utilisateur, puis appelle ses fonctions pour connaître les opérations permises à cet utilisateur. L'utilisateur peut soit choisir parmi ces opérations et fournir des informations sur la manière dont lesdites opérations doivent être exécutées soit spécifier des "scripts" de contrôle prédéfinis qui contiennent ces instructions et informations. Lorsque l'application le permet, la classe de contrôle (TsControl Class) peut être également utilisée pour créer ces "scripts" prédéfinis.

La classe de contrôle (TsControl Class) est utilisée pour configurer et initier les opérations dans l'environnement de l'invention. L'application utilise les fonctions pour lire et écrire les "scripts" de contrôle et dresser la liste des opérations possibles. Les valeurs mots-clés peuvent être définies en utilisant les fonctions "set" et "get" et des actions peuvent être commandées en utilisant la fonction "do". Certaines de ces fonctions sont génériques lorsque l'utilisateur spécifie le mot-clé ou l'opération auquel la fonction s'applique, tandis que la plupart des fonctions sont spécifiques de mots-clés ou d'opérations connues. Ces dernières fonctions sont prévues pour être utilisées avec une interface appropriée et le code du composant de l'application.

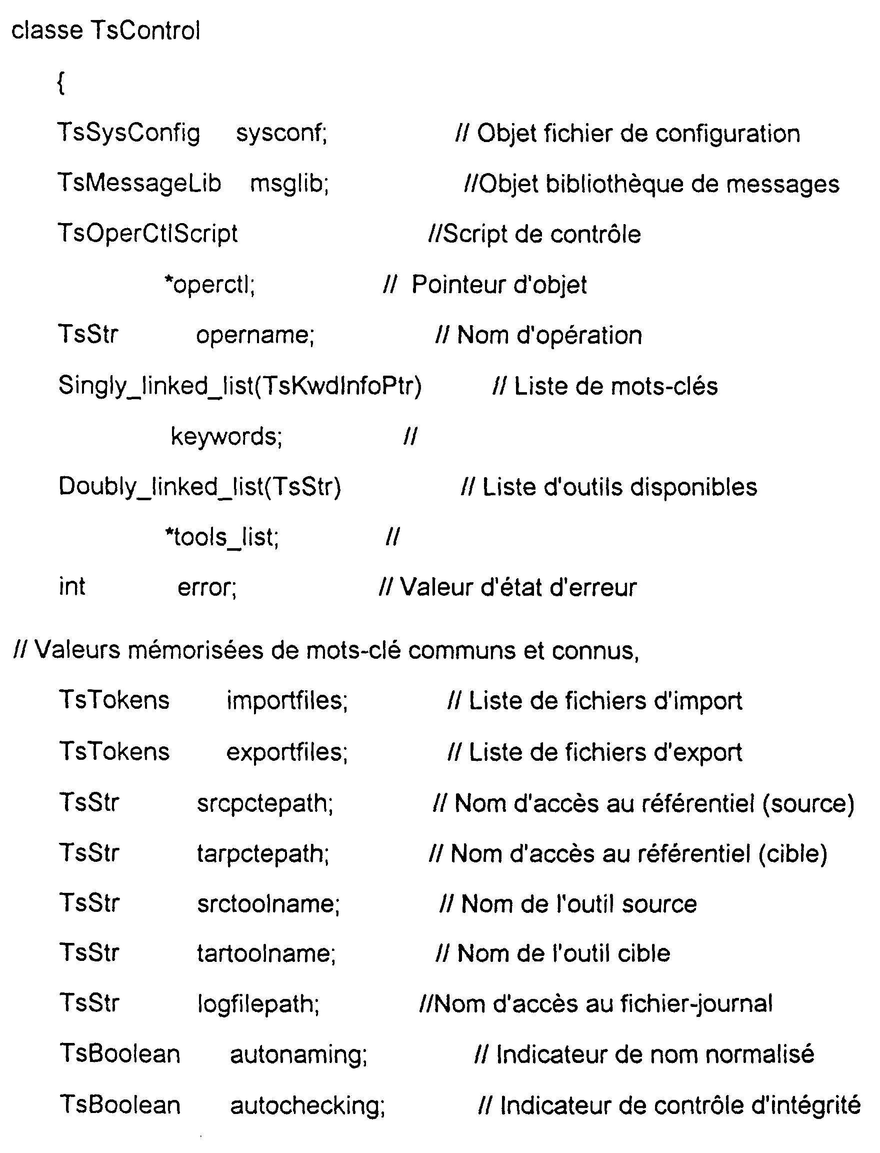

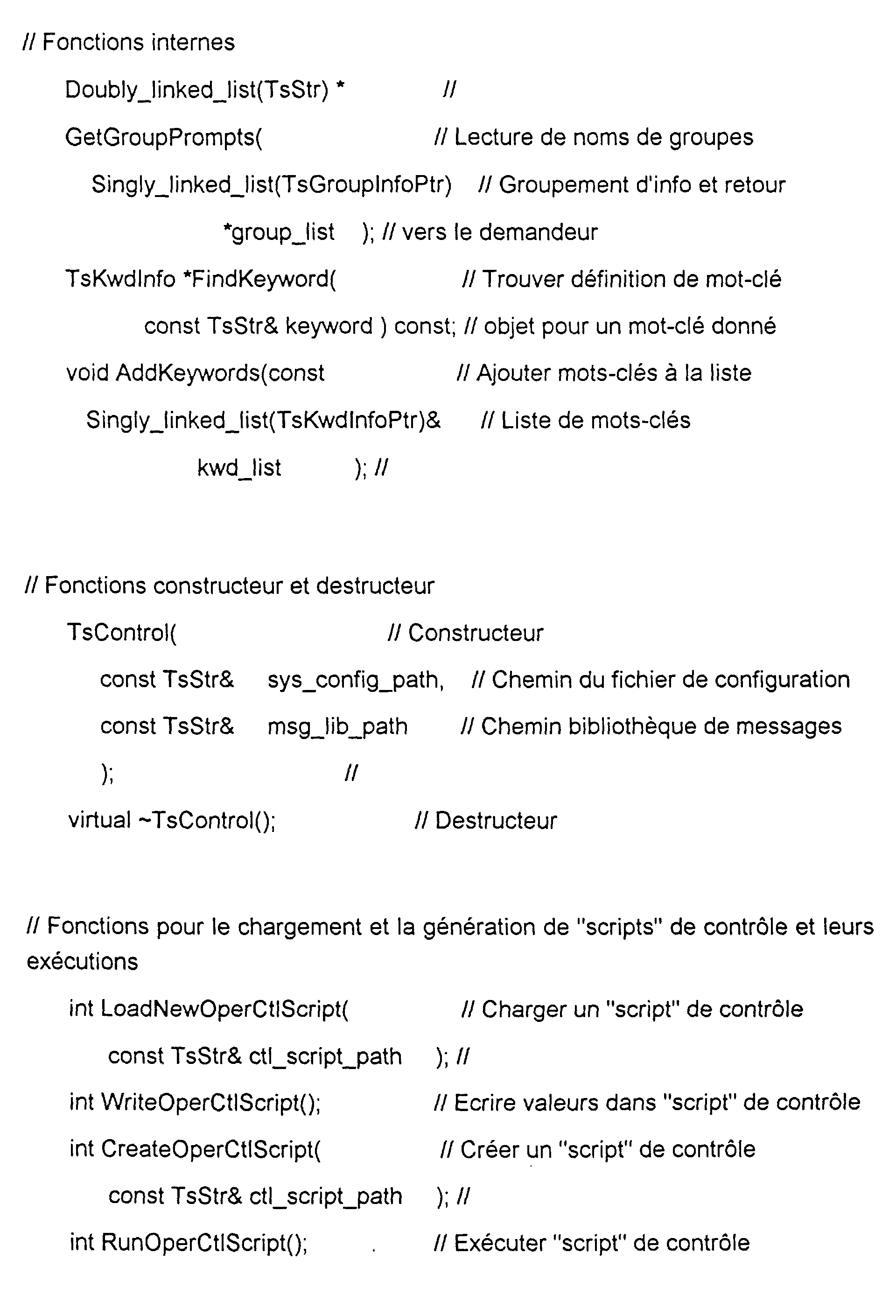

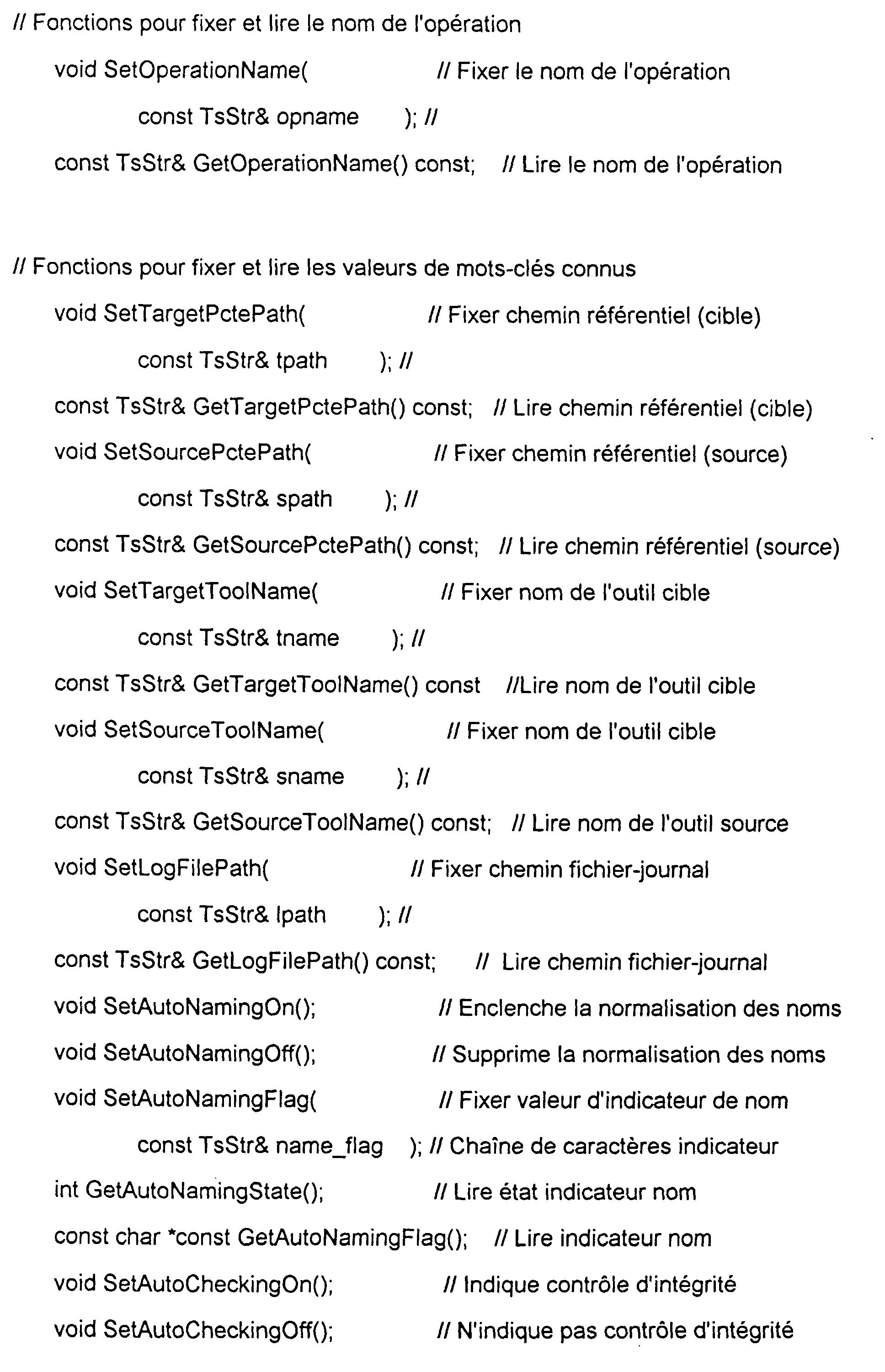

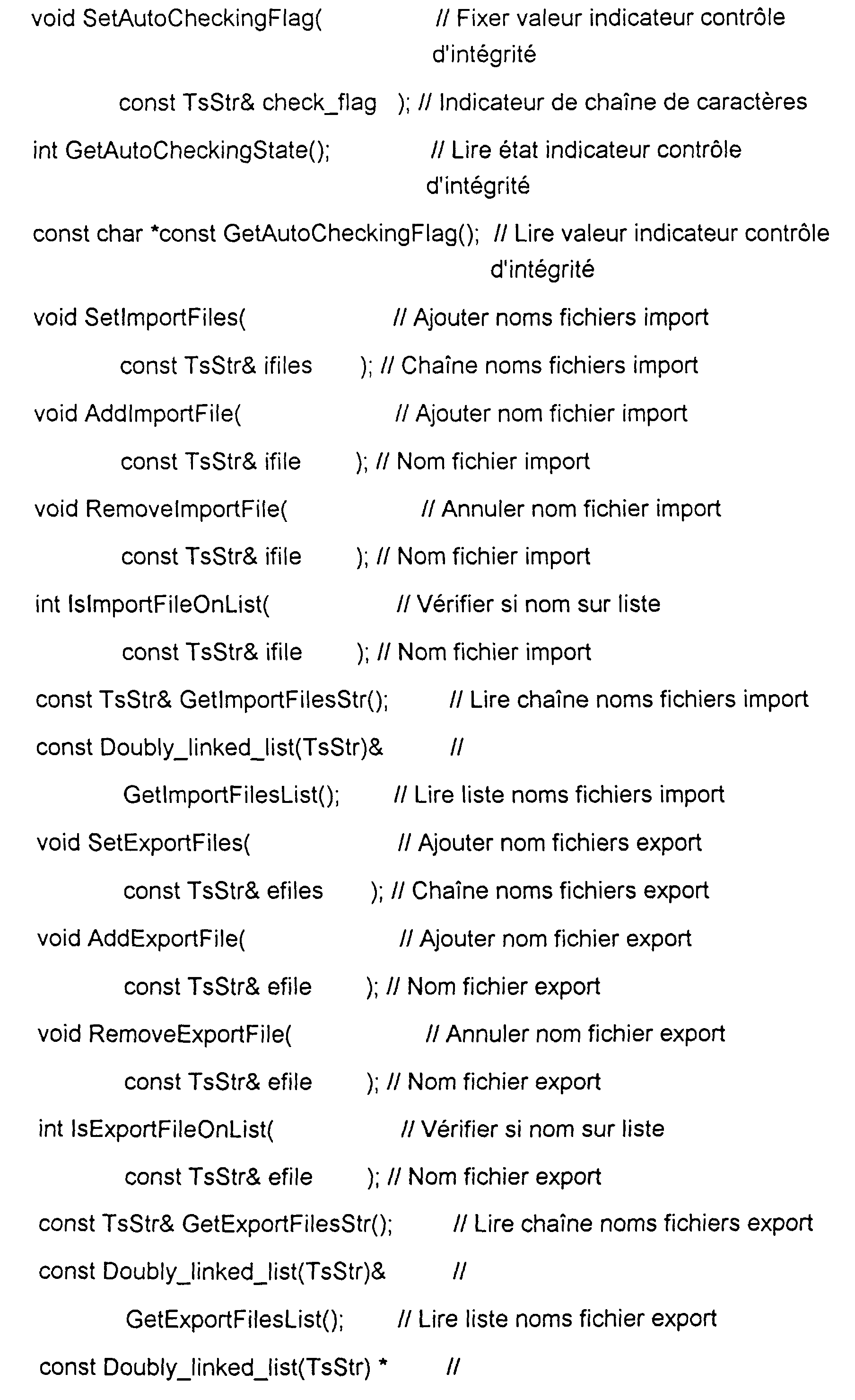

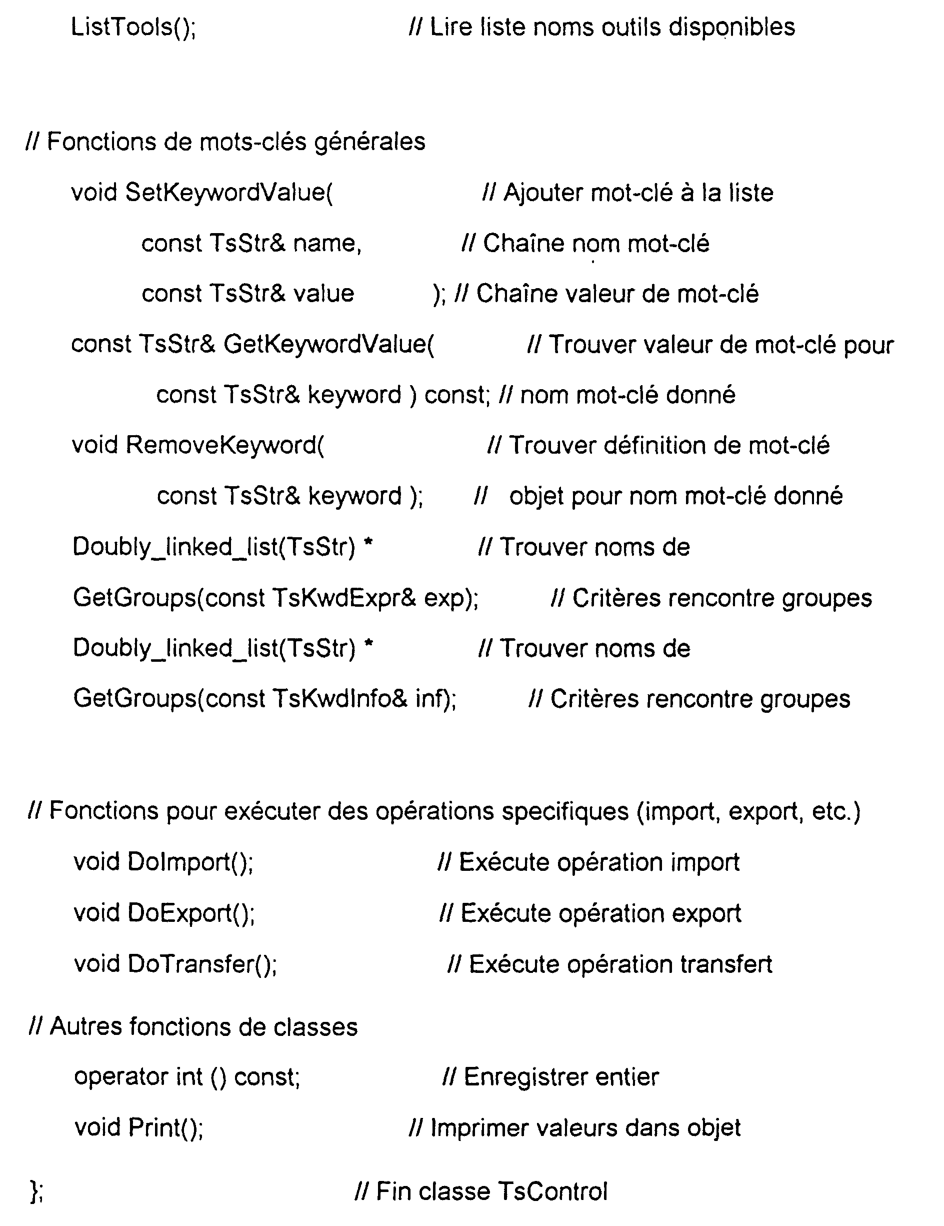

La classe SysConfig est une classe spécifique du fichier de configuration dans l'environnement de l'invention. L'instantiation permet de fixer le nom d'accès du fichier de configuration. Cette classe peut être utilisée de deux manières.

Selon une première manière, lors de l'installation, un exécutable appelé avec un indicateur spécial et le nom d'accès du fichier de configuration instancie cette classe et appelle la fonction statique "SysConfig::AppendLocalConfiguration()" qui a juste à appeler la table de configuration courante de l'exécutable (à partir d'une table statique) à la fin du fichier. Toute information pour l'exécutable courant qui existait antérieurement dans le fichier est annulée.

Selon l'utilisation normale, la classe SysConfig présente une fonction "SysConfig::LoadFile()" d'enregistrement et d'analyse du fichier de configuration et de création des structures de données d'exécutable, de groupe, de méthode, etc., qui représente ce qui existe dans la présente installation. La fonction LoadFile() vérifie également que la configuration de l'exécutable courant correspond à ce qui est dans le fichier de configuration. Une série de fonctions "SysConfig::Find...()" offre un accès rapide aux structures du système pour la récupération de l'information de configuration.

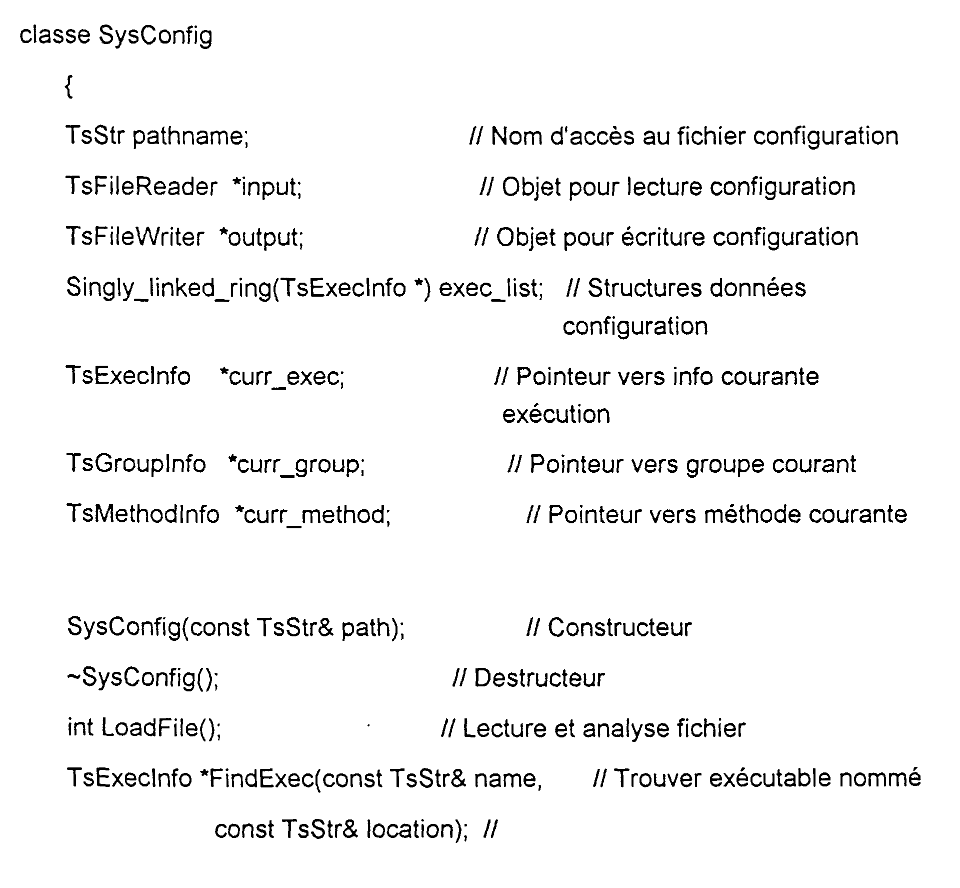

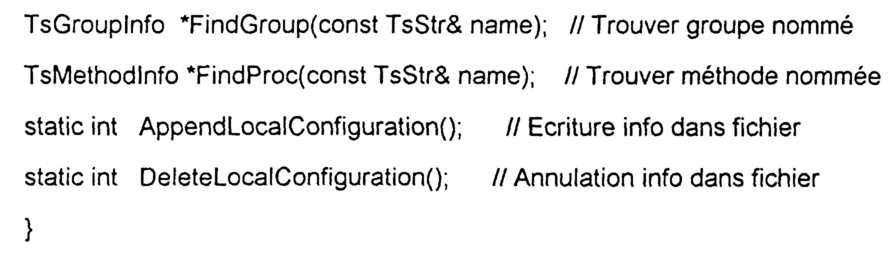

La classe OperCtlScript est une classe spécifique des scripts de contrôle de l'environnement de l'invention. L'instantiation permet de fixer le nom d'accès du script de contrôle. La fonction "OperCtlScript::LoadFile()" est utilisée pour enregistrer et analyser le script de contrôle en créant un liste d'opérations à exécuter avec les listes correspondantes de définitions de mots-clés.

La fonction "OperCtlScript::SaveFile()" est utilisée pour sortir les définitions et les commandes d'un script de contrôle. Cette classe renferme également des fonctions pour l'exécution des commandes et la configuration et l'appel de l'exécutable suivant.

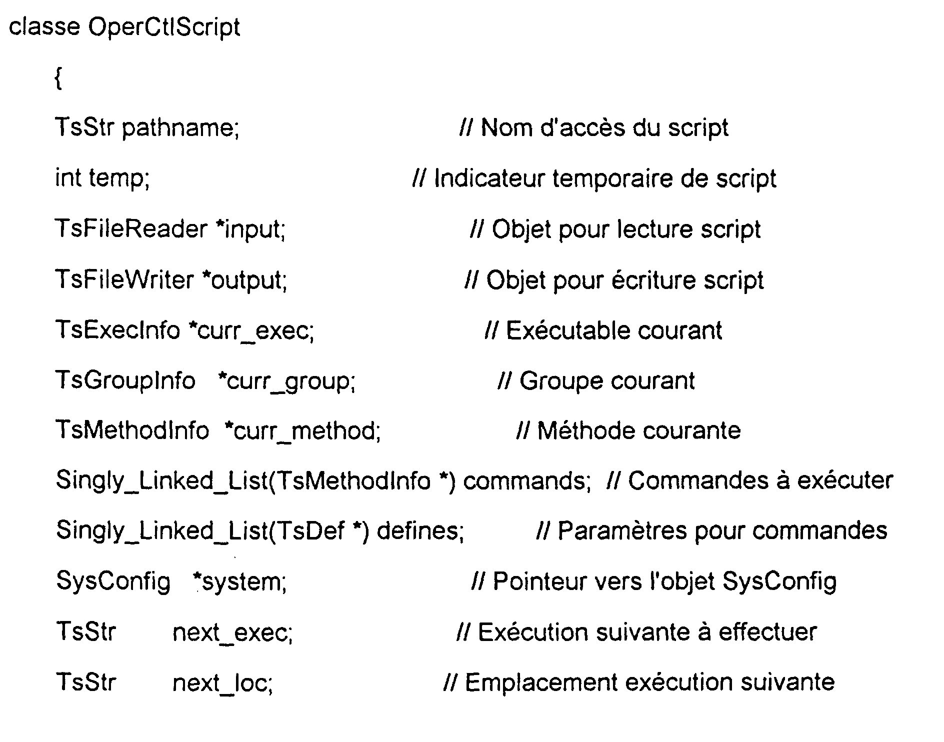

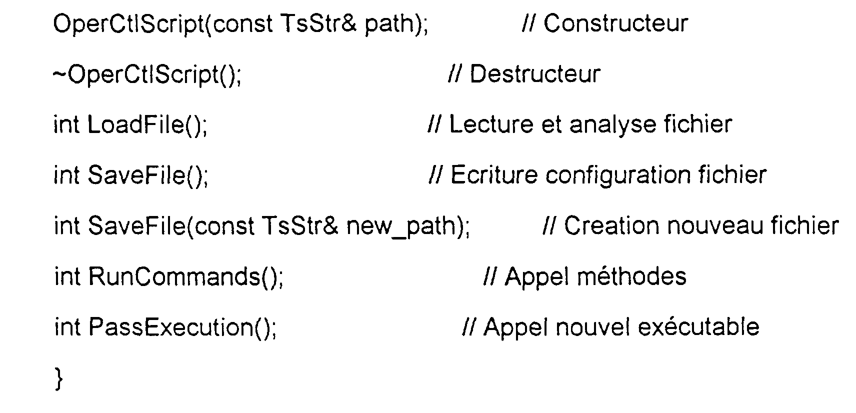

La classe TsDef est utilisée pour stocker et récupérer les mots-clés et les valeurs d'un script de contrôle.

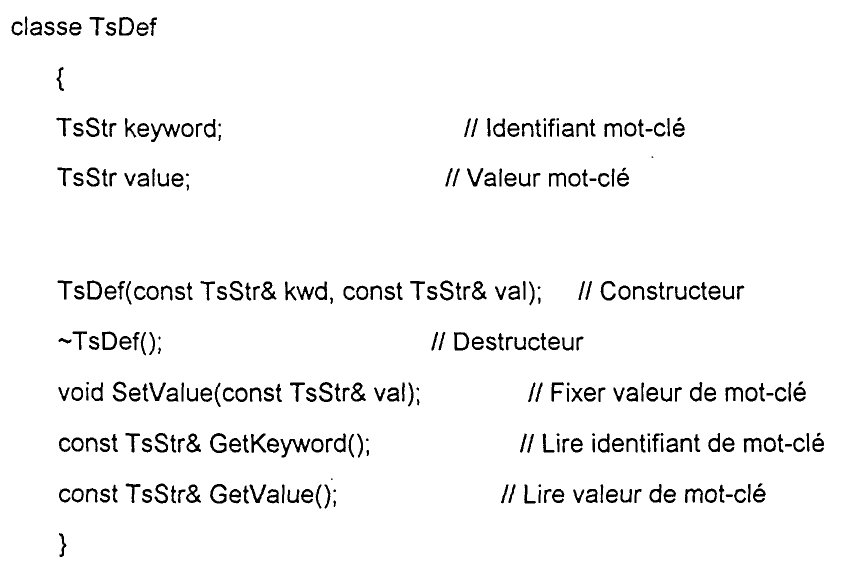

La classeTsKwdInfo est utilisée pour stocker et récupérer les mots-clés et demander les identifiants d'un fichier de configuration. Un objet de cette classe stocke également un pointeur vers l'objet TsDef contenant la valeur courante (définition la plus récente) du mot-clé.

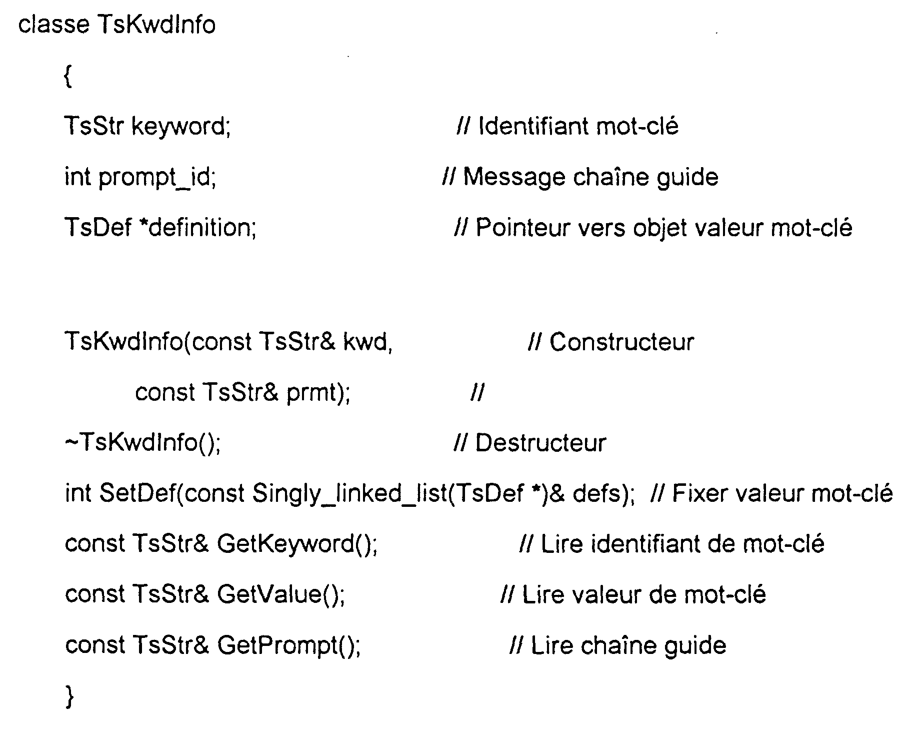

La classe TsMethodlnfo est utilisée pour identifier une méthode avec ses mots-clés et options associés.

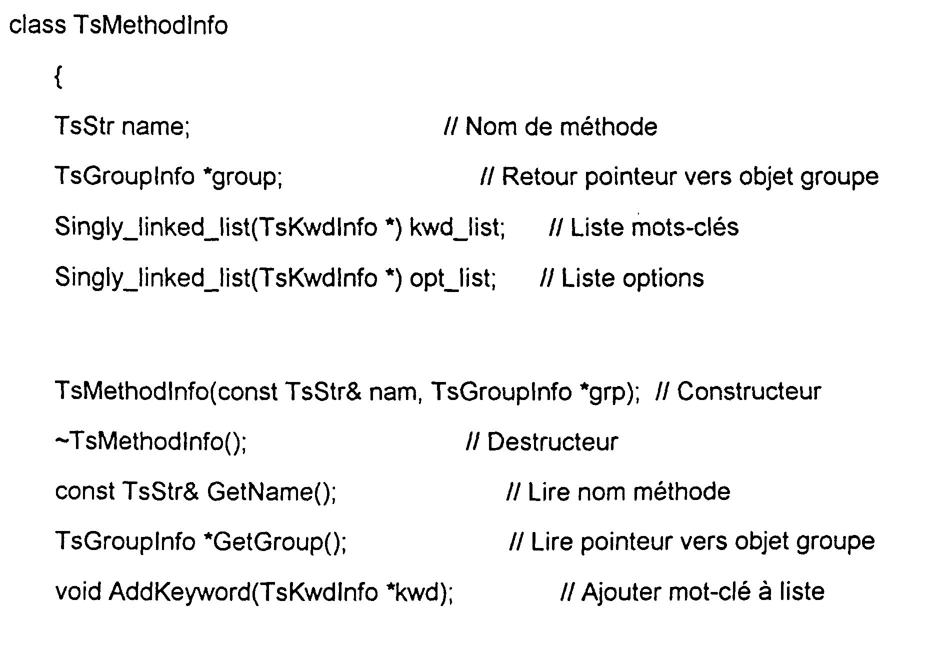

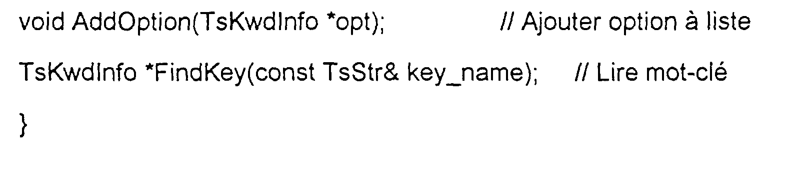

La classe TsGrouplnfo est utilisée pour identifier un groupe et ses méthodes associées.

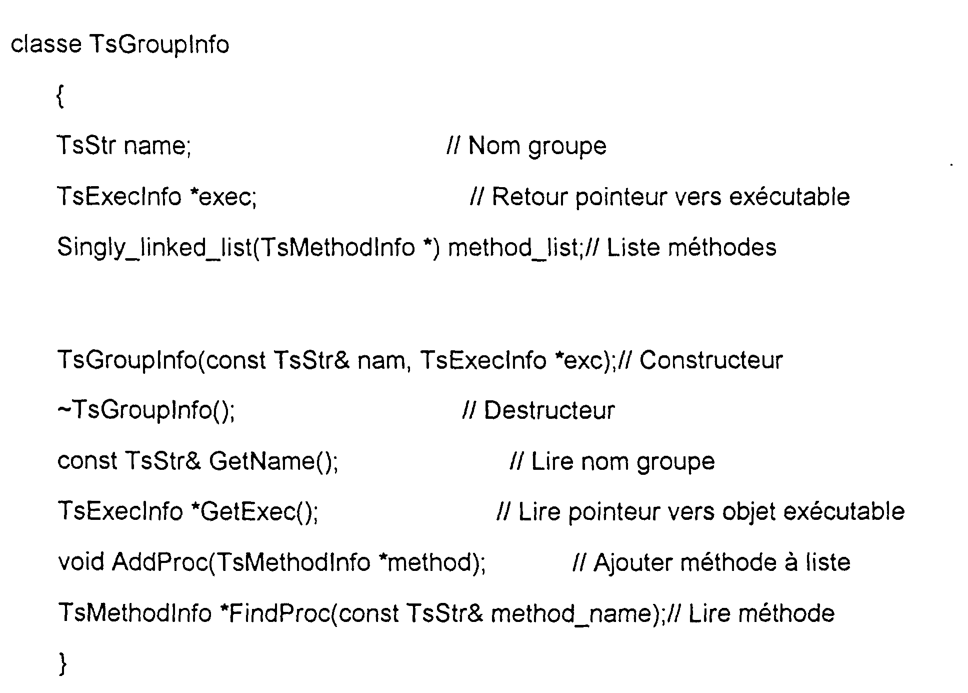

La classe TsExeclnfo est utilisée pour identifier un exécutable et ses groupes associés.

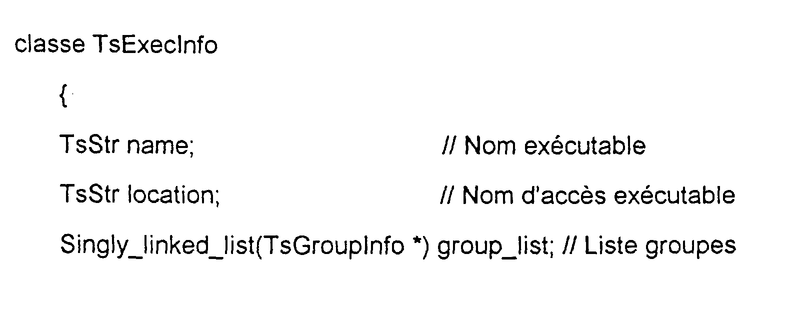

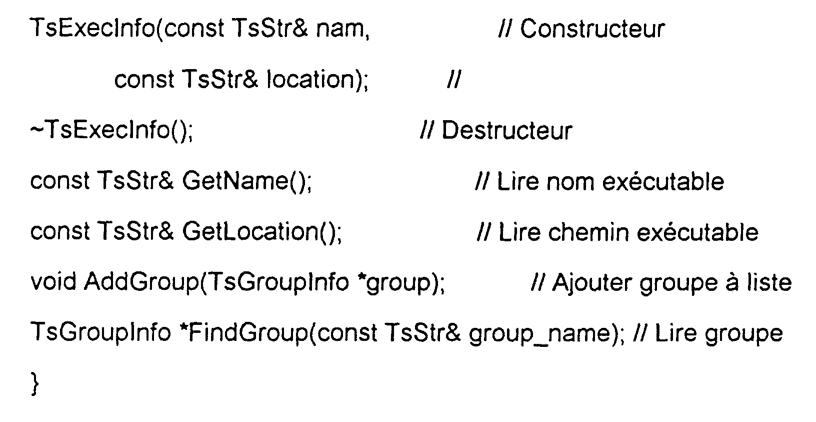

Il est à présent proposé des définitions de classes relatives à la représentation des modèles et métamodèles stockés en mémoire et à l'allocation dynamique des objets de modélisation. Le mécanisme (appelé mécanisme D sur la figure 2) utilisé permet de stocker en mémoire, pour accès par les composants de la passerelle, une définition de métamodèle et un modèle de données en allouant dynamiquement les objets du modèle dans ladite mémoire. Ce mécanisme permet de charger un métamodèle puis de construire un modèle en utilisant le gabarit du métamodèle. Une telle construction permet avantageusement une rapide mise en correspondance entre les objets, les définitions de propriété et leurs instances. Le mécanisme D possède des classes privées cachées et des classes d'interface publiques. Pour stocker et accéder aux données dans les objets, un programme utilise des fonctions des classes d'interface publiques TsOBJ et TsLNK. Les objets d'adressage utilisent des index dans un arbre d'un ensemble de pointeurs pour une classe d'objet ou de lien, une instance d'objet, un type de propriété et une liste de lignes de la valeur, la classe d'objet ou de lien et le type de propriété peuvent être donnés comme des noms de texte que les interfaces font correspondre aux valeurs d'index. Outre les ensembles de pointeurs pour un accès direct à une vue hiérarchisée des données, le mécanisme D possède des ensembles d'index classés par valeurs de propriétés-clés d'objets correspondants qui fournissent un accès rapide (recherche dichotomique) aux objets sélectionnés et permettent des affichages d'objets classés par champs-clés.

Le "constructeur" du mécanisme D va appeler la fonction readMetaModel pour lire le fichier de définitions de propriétés et d'objets. Cette routine va créer une définition de classe d'objet pour chaque type d'objet, en insérant l'adresse de définition de classe d'objet dans l'ensemble de classes d'objets ordonné par nom de classe. Le mécanisme D supporte l'héritage. En outre, il insère chaque propriété dans un ensemble de propriétés ordonné par nom de propriété. Une fois que les objets et les propriétés sont définis, l'index de classe d'objet et chaque index de propriété de classe d'objet sont figés, prêts à être utilisés à la construction d'un modèle.

Un outil construit et manipule un modèle (outil ou modèle d'information neutre NIM) dans ce mécanisme D. Lorsqu'il est appelé pour fixer une valeur de propriété, le mécanisme D exécute les étapes suivantes qui sont optimisées lorsque les noms sont déjà mis en correspondance avec les valeurs d'index et que les objets créés à la demande existent déjà:
- recherche du nom de type objet dans le tableau des classes d'objets pour lire l'index cllNdx,
- à la position clNdx dans le tableau d'objets de modèle, trouver ou créer l'élément pour le tableau d'instances d'objets et affecter un nouvel index objNdx,
- créer un nouvel objet et stocker son adresse dans le tableau d'instances d'objets,
- chercher le nom de propriété dans le tableau de définitions de propriétés pour trouver l'index propNdx,
- à la position propNdx dans le tableau d'instances de propriétés d'objets, trouver l'adresse de valeur de propriété ou en créer une nouvelle et y stocker cette adresse,
- chercher le numéro de ligne dans la liste de valeurs de propriétés, si trouvé stocker la valeur dans l'objet valeur de propriété, sinon créer une nouvelle valeur de propriété et l'insérer dans la liste,
- indexer le tableau d'instances de propriétés pour trouver où stocker le pointeur valeur de propriété,
- en stockant une valeur primaire ou secondaire de propriété-clé, insérer ou mettre à jour l'index objNdx dans la table d'index correspondante ordonnée par la valeur clé.

Le tableau d'instances de propriétés est une concaténation des pointeurs de propriété de classe courant et antérieurs.

Les classes TsDynamo, TsOBJ, et TsLNK définissent l'interface utilisateur pour l'accès au mécanisme D. La classe TsOBJ permet d'indexer la classe, l'objet, la propriété et la ligne en fournissant un mécanisme d'adressage dans les objets du mécanisme D. La classe TsLNK opère l'adressage des liens du mécanisme D. L'interface du mécanisme D offre à l'utilisateur un domaine d'application (modélisation de données) et cache les pointeurs, les structures et l'allocation mémoire C++. Les itérateurs TsOBJ bouclent sur toutes les classes d'objets ou toutes les occurences d'une classe d'objets ou toutes les propriétés. Un programme peut parcourir un modèle ou sélectionner une partie ou un sous-arbre d'objets et de propriétés. Les itérateurs TsLNK (dérivée des itérateurs TsOBJ) bouclent sur les liens. Un programme peut explorer un modèle en traversant des liens entre objets. Un lien peut avoir des propriétés parce qu'il hérite de cette possibilité de la classe TsOBJ.

La classe TsDynamo présente des objets (objet C++ appelé objet dynamo dans la suite) qui désignent un métamodèle et un modèle en train d'être manipulés. Un objet TsOBJ désigne un objet dynamo et contient les index d'une position dans le modèle. La position d'un objet TsOBJ peut être fixée par des noms de classes et de propriétés dans des chaînes de caractères et/ou par des valeurs d'index. Ceci permet d'allier la polyvalence des noms à l'exécution à l'efficacité d'utilisation de sous-scripts. Les valeurs d'index égales à 1 correspondent à des valeurs implicites.

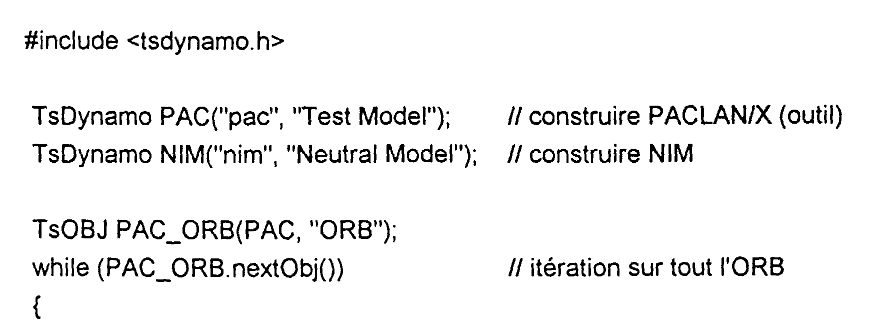

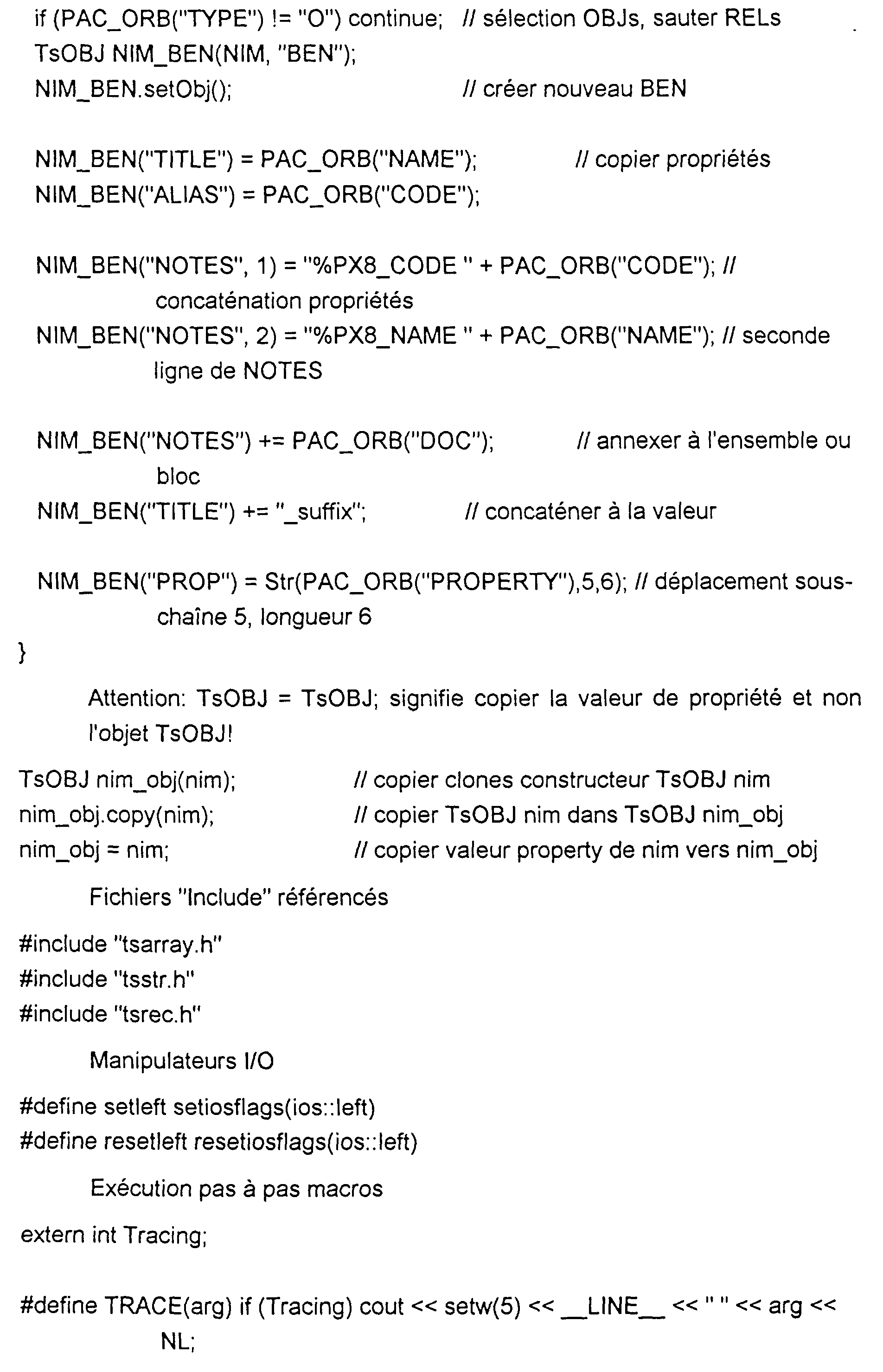

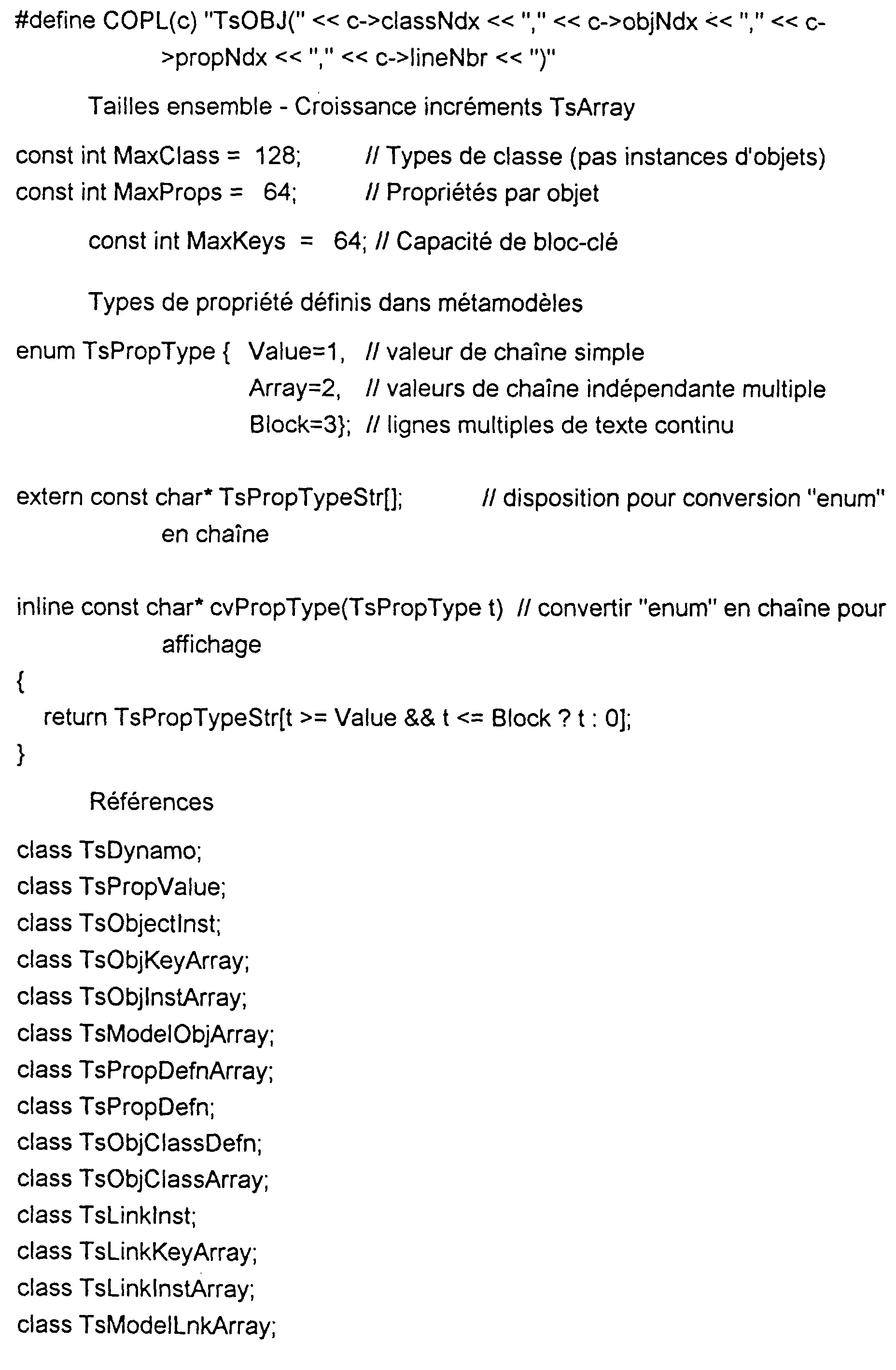

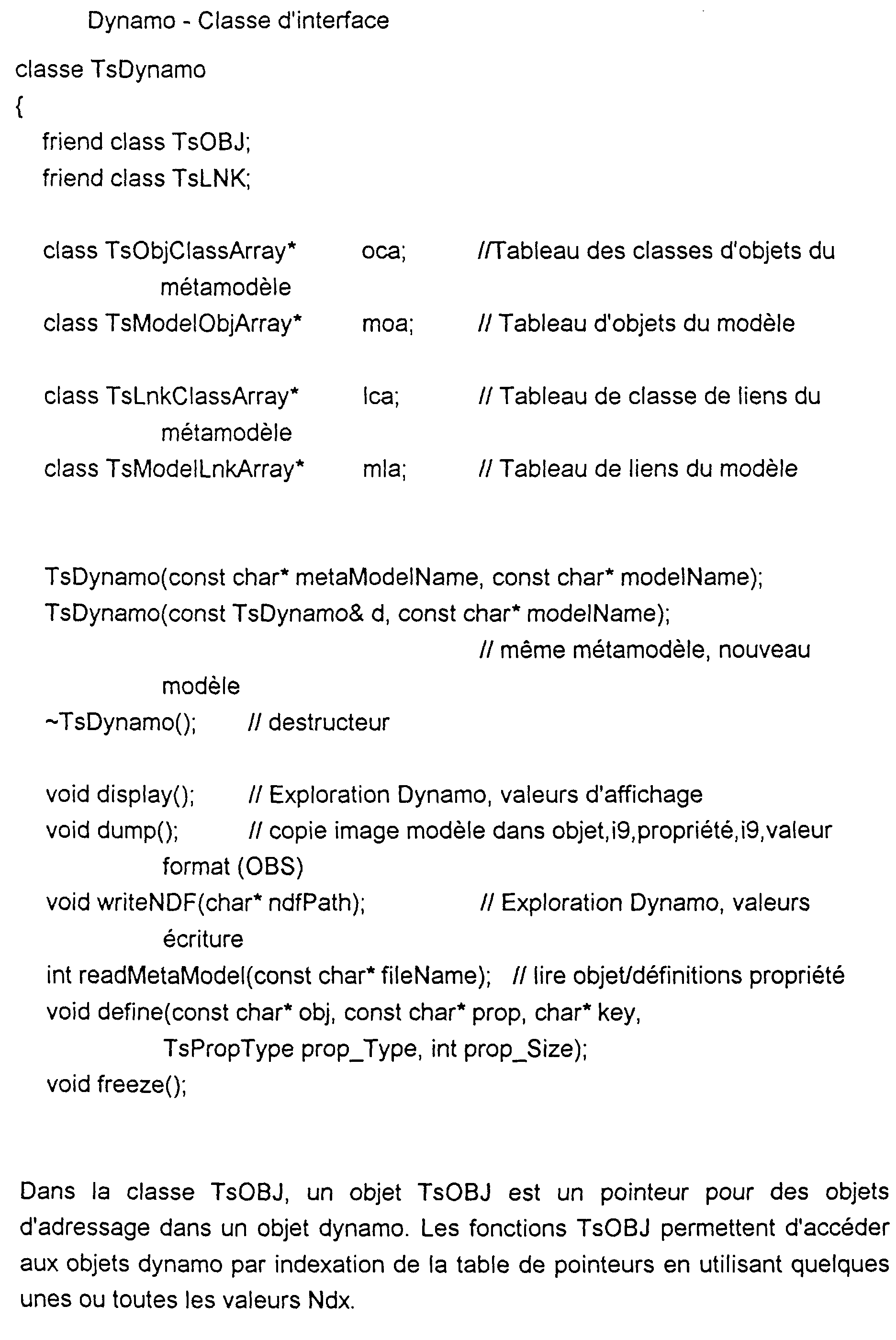

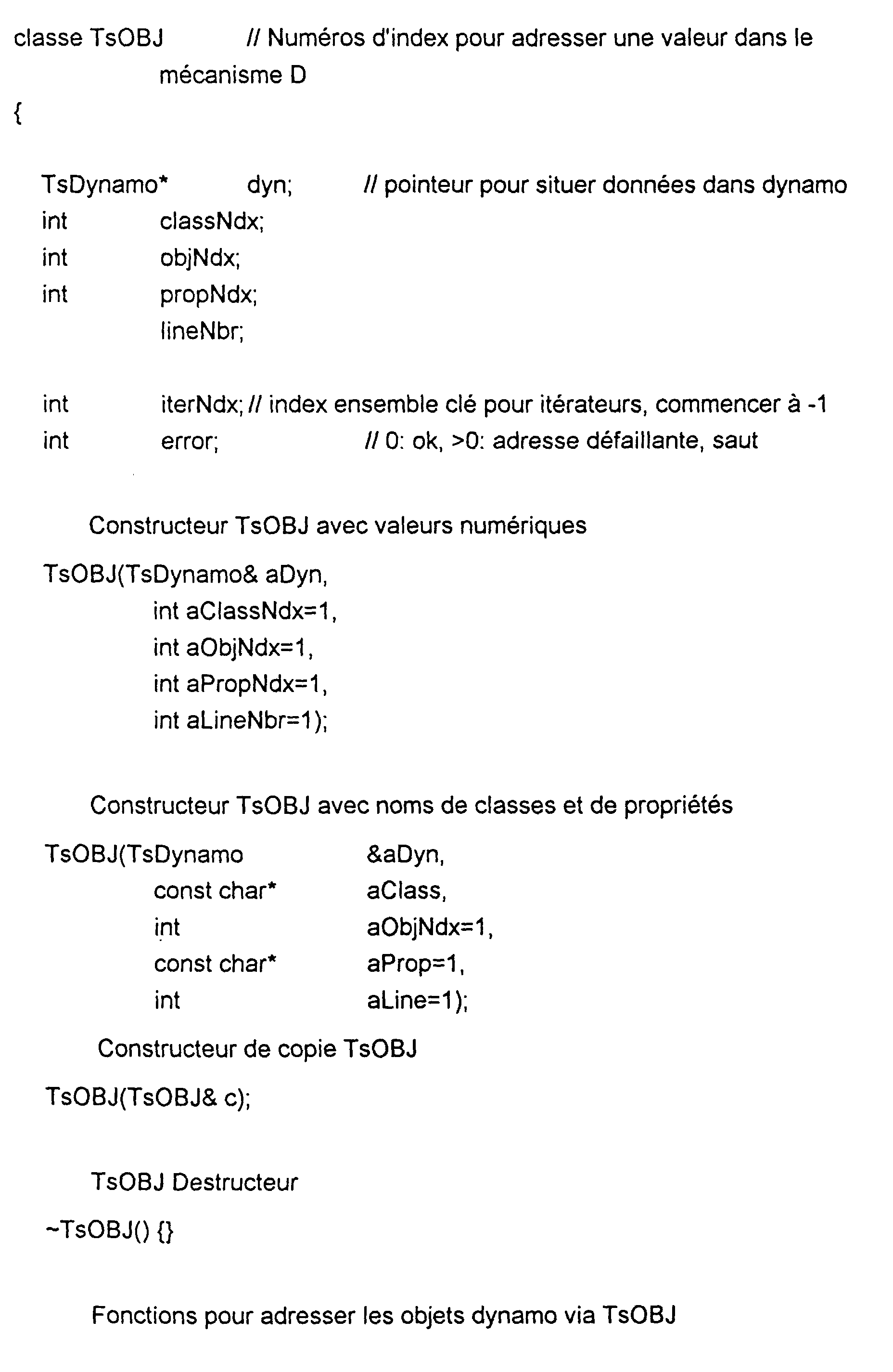

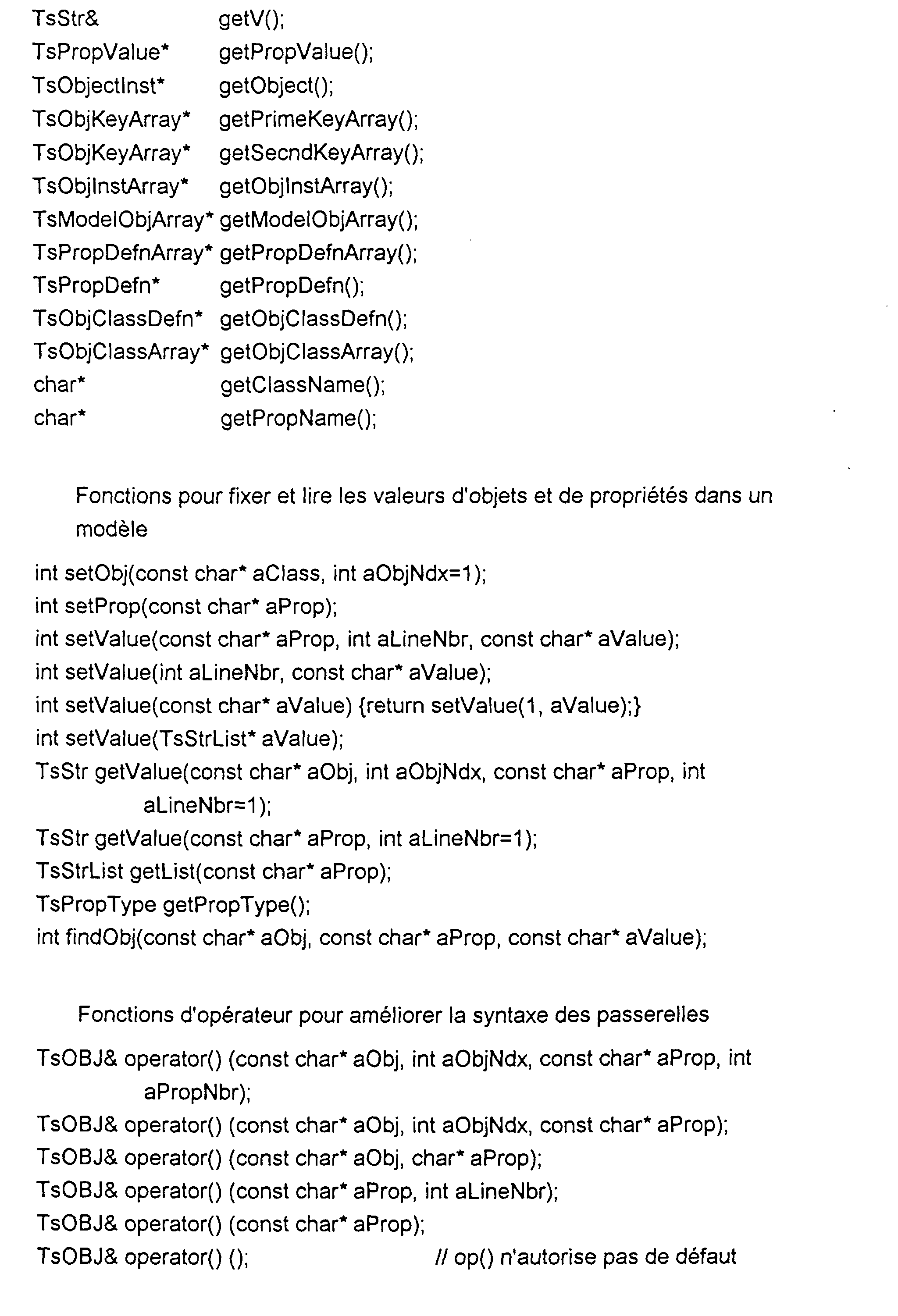

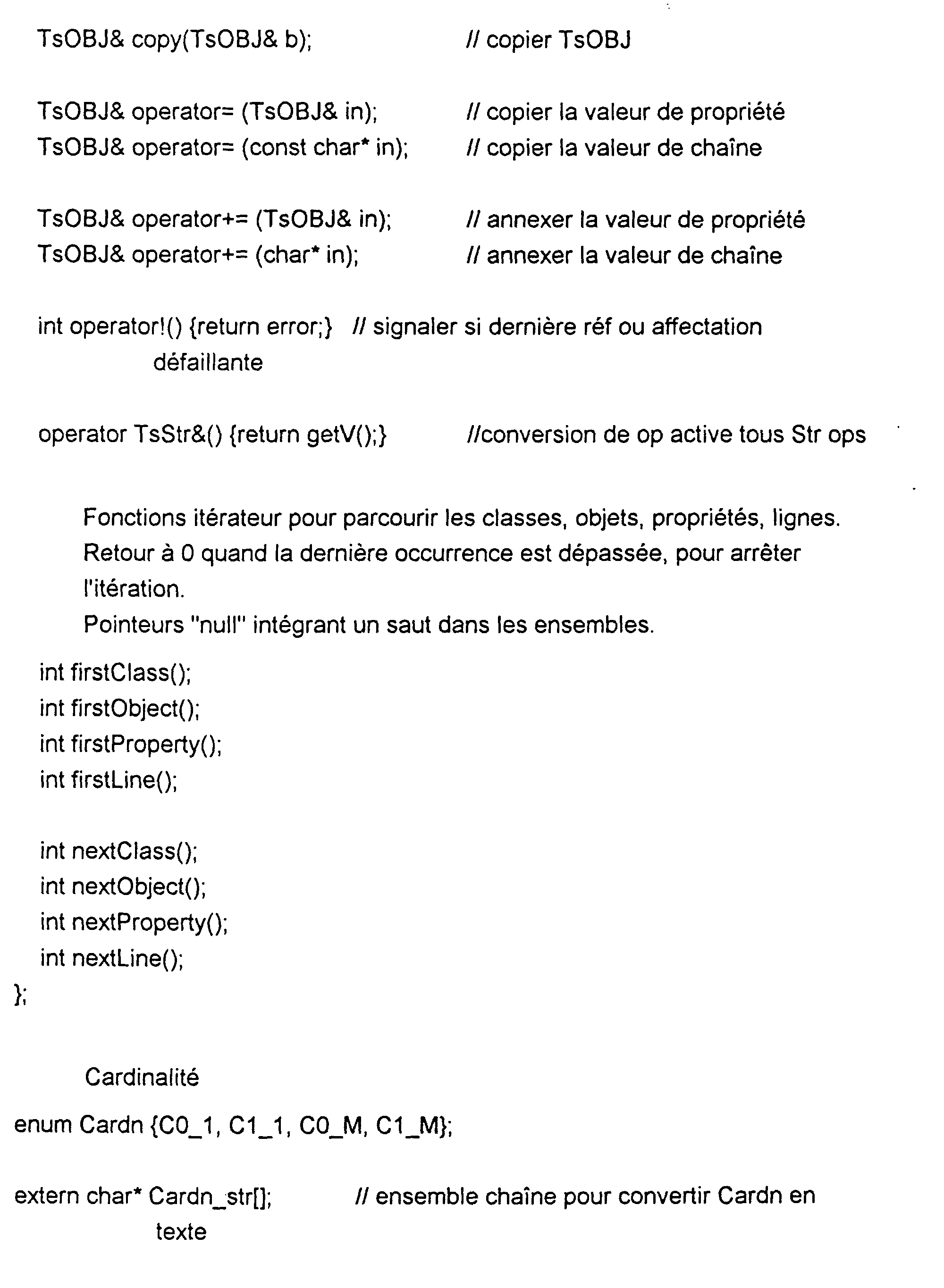

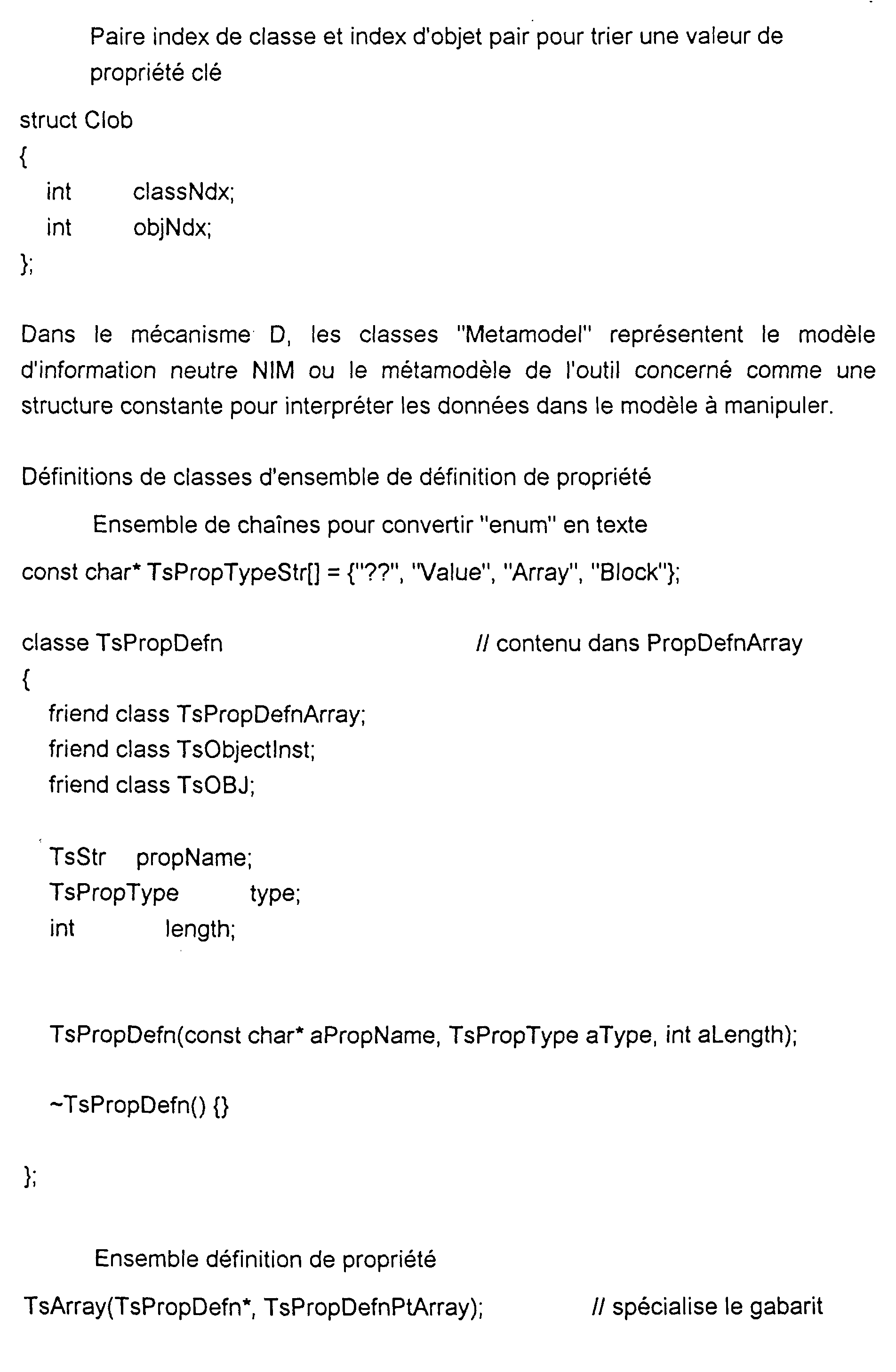

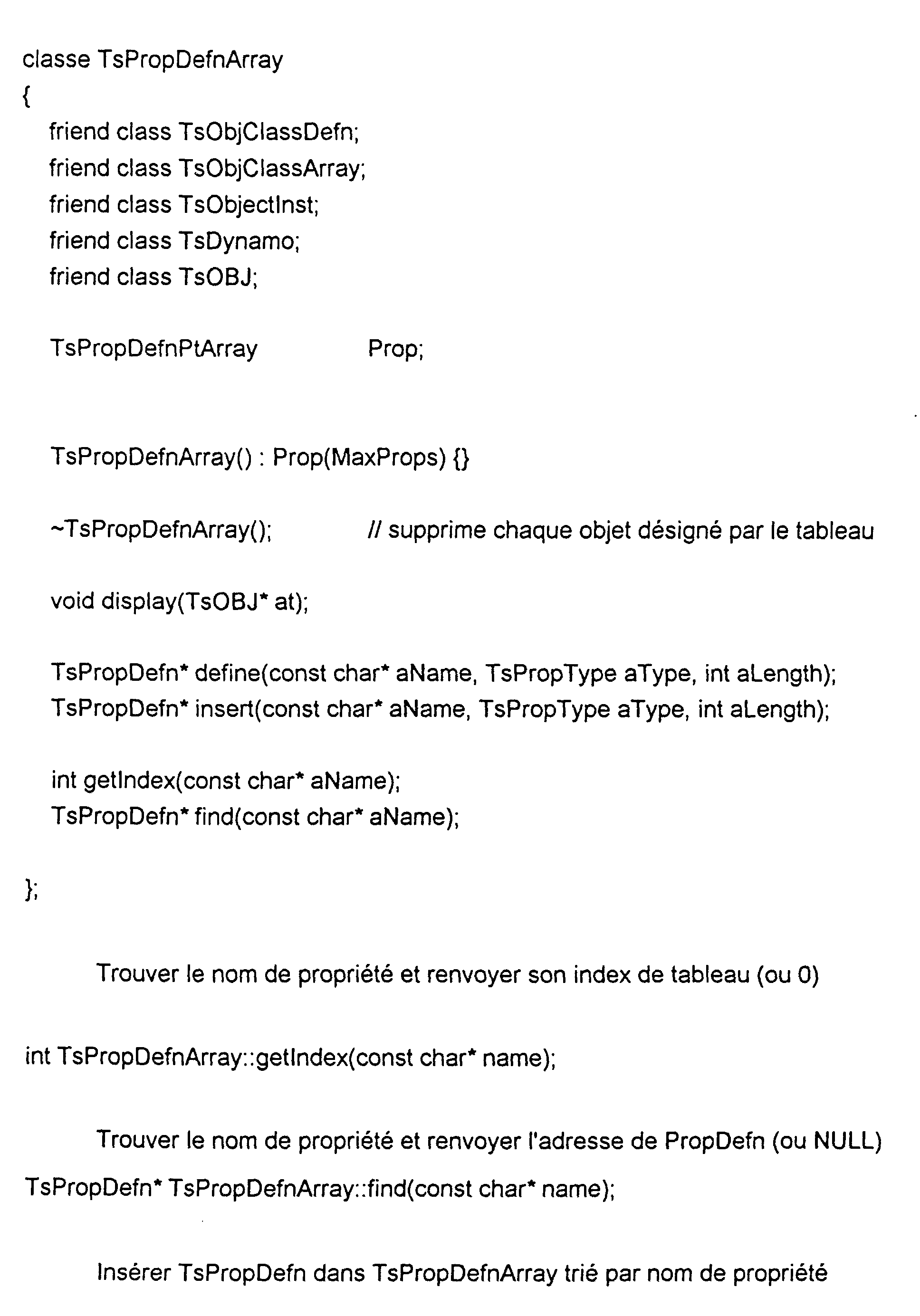

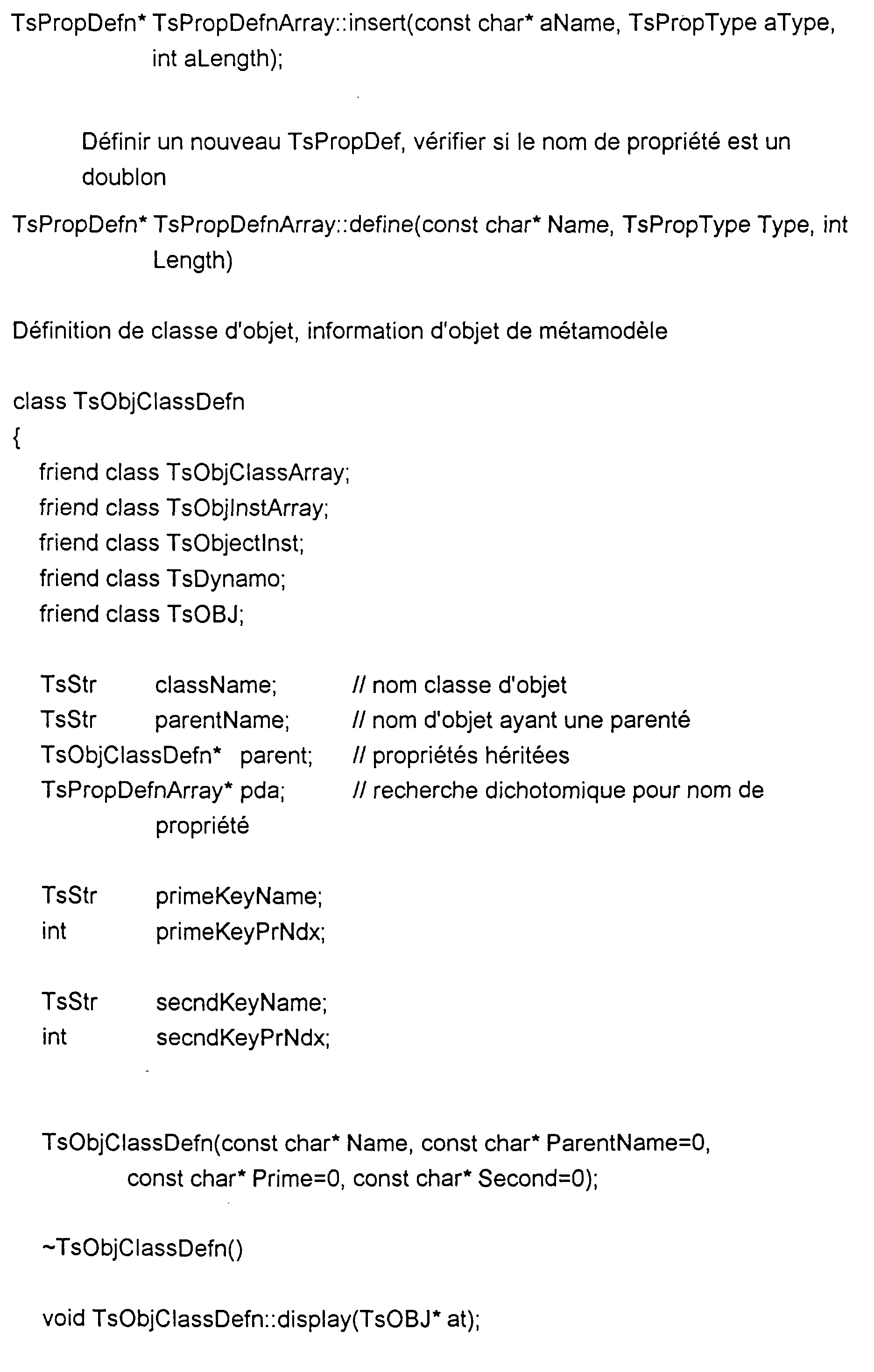

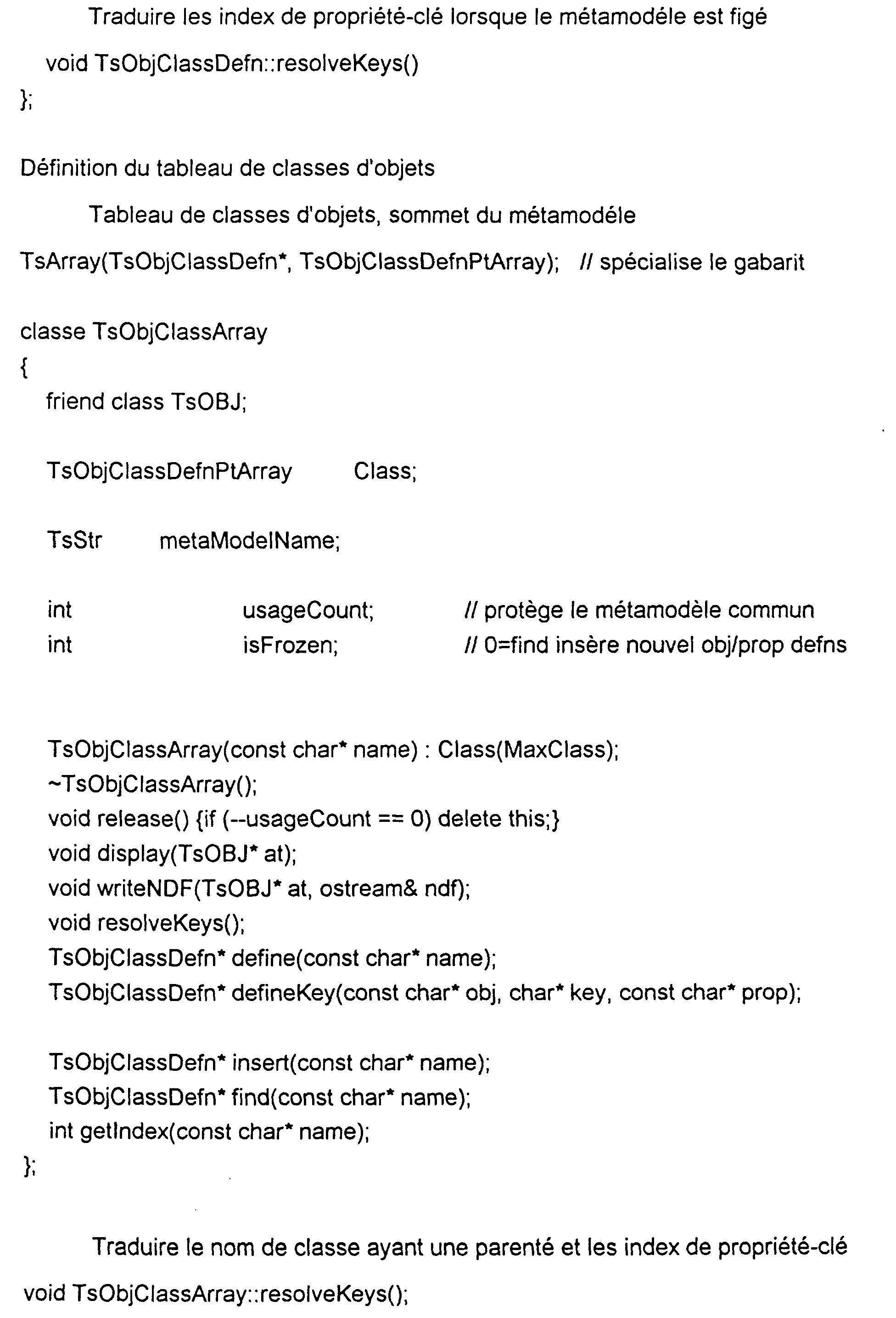

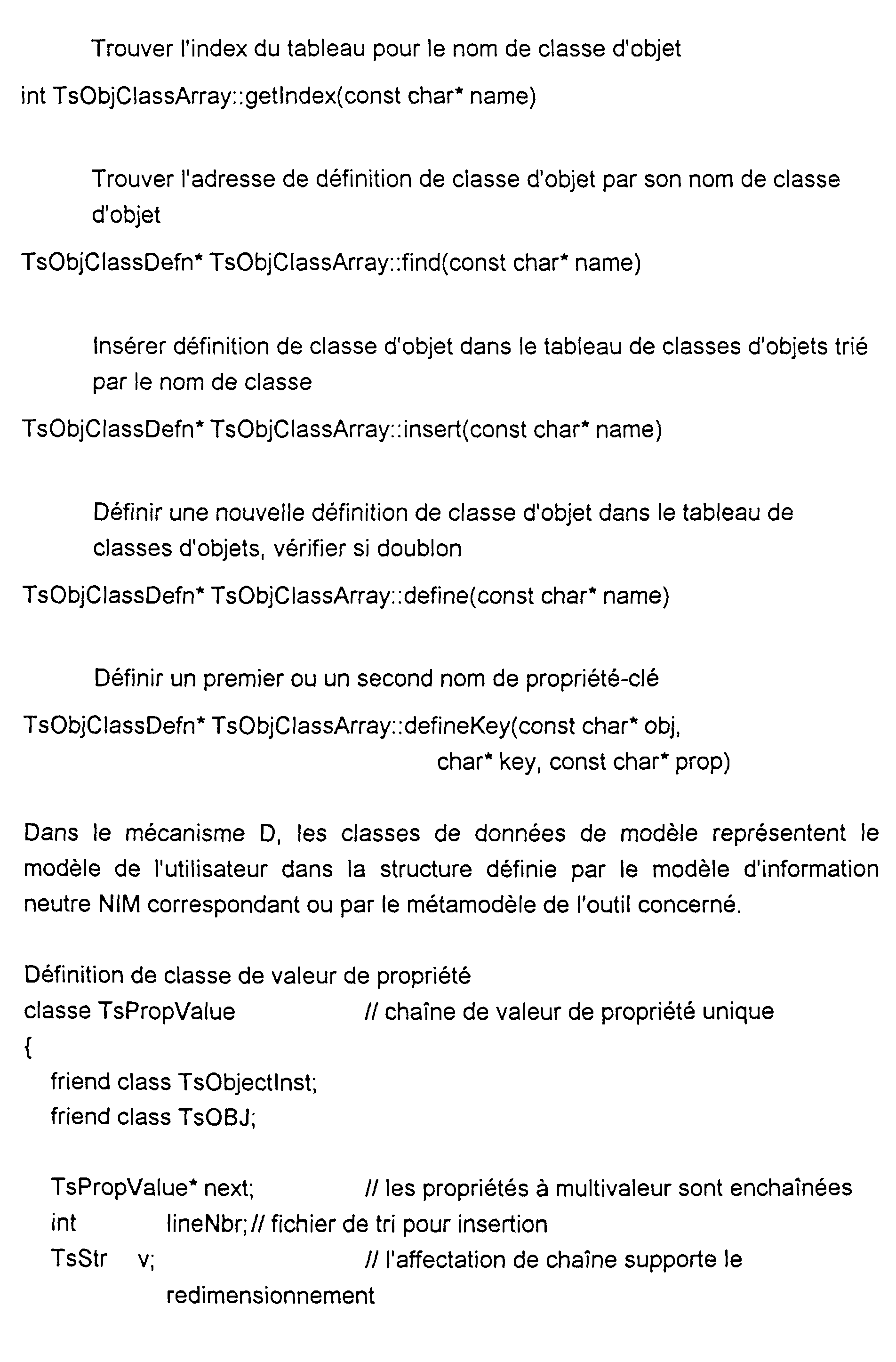

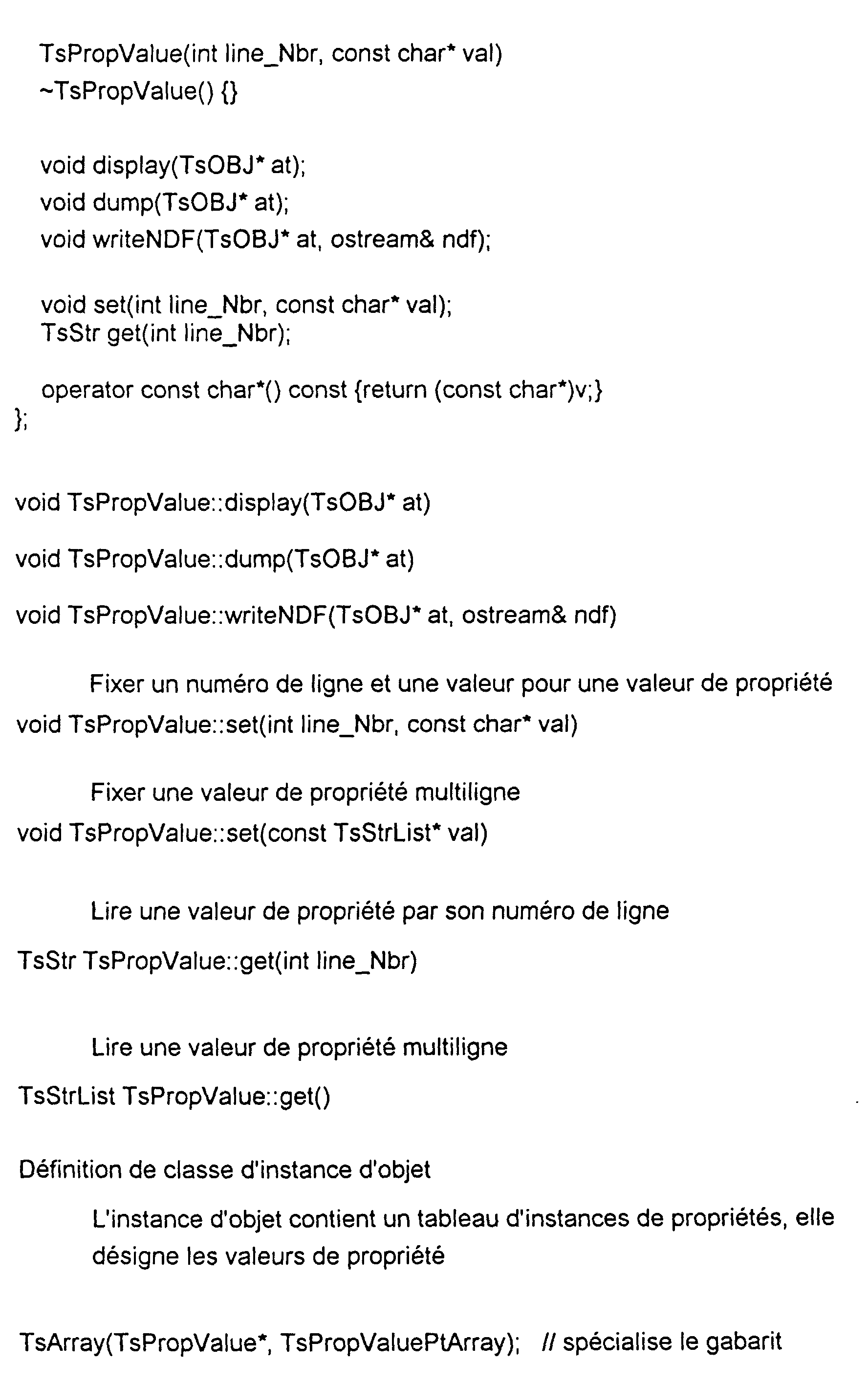

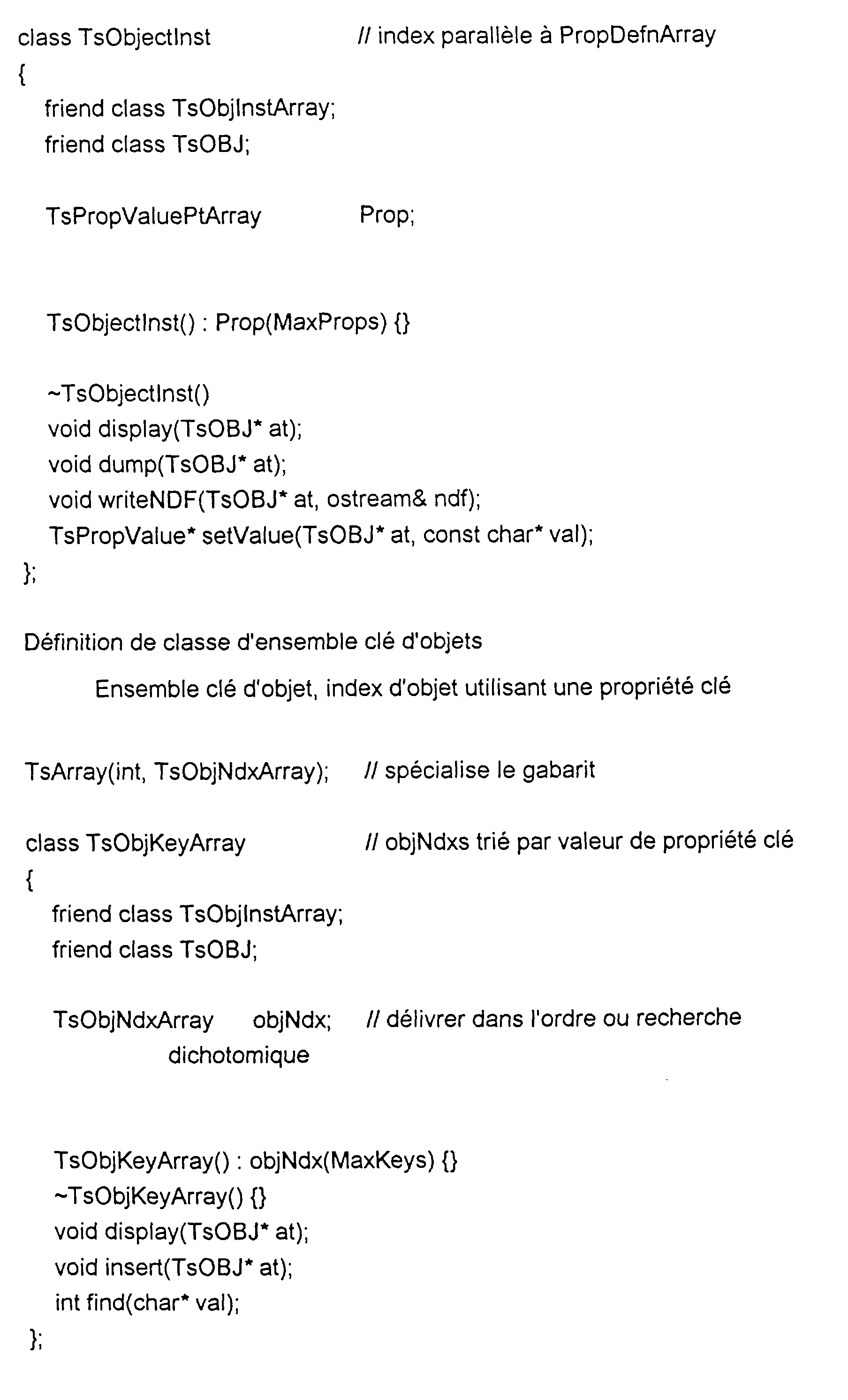

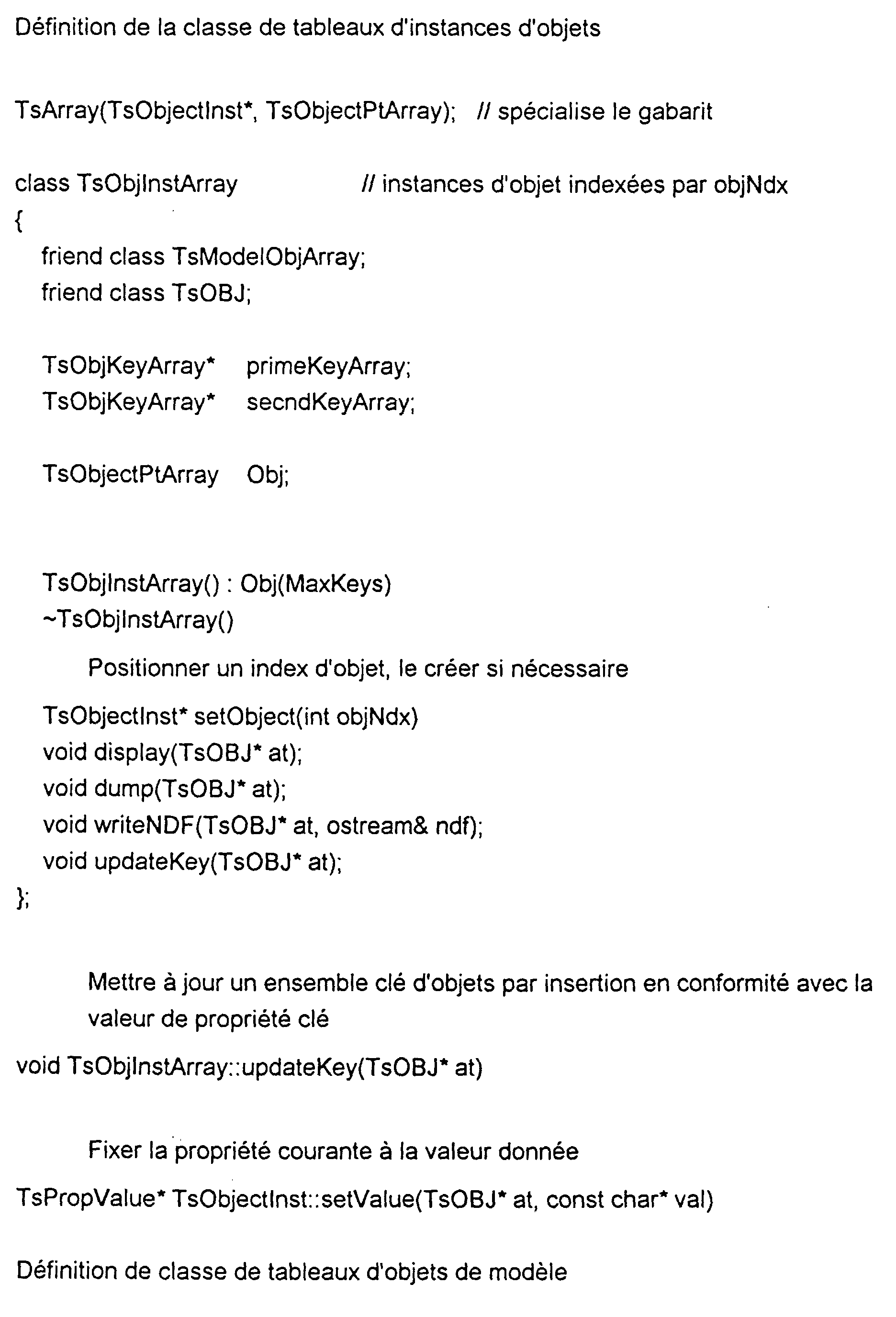

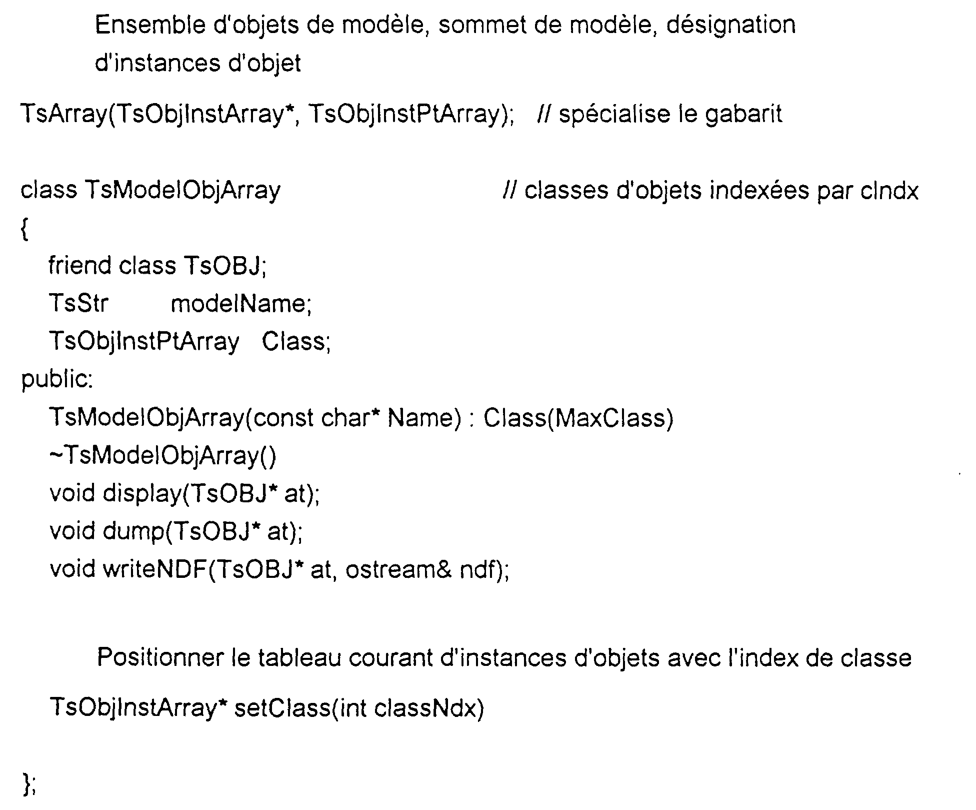

Une définition de classe de liens dans le mécanisme D est une sous-classe d'une définition de classe d'objets. Un lien de modèles est une instance d'un lien. Une définition de classe de liens décrit les classes d'objets que les liens peuvent rattacher. Une instance de lien spécifie les instances d'objets de modèle qui y sont rattachées.

Les objets de lien dérivent d'objets réguliers parce que les liens ont les caractéristiques des objets (ils ont les noms et peuvent avoir les propriétés), mais ils ont également des vecteurs "to" et "from" et une cardinalité. Les éléments de données additionnels aux liens, dans un but d'optimisation des performances, sont codés en langage C++ plutôt que d'être mis en oeuvre comme des propriétés d'objets. Les ensembles d'index triés permettent également d'optimiser la recherche.

Le constructeur du mécanisme D lit les définitions de liens avec les autres définitions d'objets à partir d'un métamodèle d'outil ou du fichier de métamodèles du modèle d'information neutre NIM.

Un lien contient les index d'objets clNdx et objNdx provenant et à destination desdits objets pour permettre de trouver les objets de modèle qui sont connectés par le lien. Une définition de lien spécifie les objets qu'elle peut regrouper mais une classe réelle peut être dérivée d'une classe d'objets spécifiée, ainsi les liens contiennent les index clNdx et objNdx. Les liens peuvent posséder des propriétés au même titre que les objets.

Le fait de créer un lien entre deux objets implique aussi son entrée dans les tableaux d'index. Un ensemble de clés de liens est trié pour trouver tous les objets ou des objets spécifiques qu'un type de lien regroupe déjà. Un ensemble de liens d'objets est trié pour trouver tous les liens ou des liens spécifiques provenant ou à destination d'un objet donné. La définition de classe de liens peut contenirun index propNdx d'une propriété dont la valeur détermine l'ordre d'itération au travers des liens d'un objet. Ceci permet d'inspecter les attributs d'une entité et les sous-champs d'un attribut dans un ordre spécifique. Le séquencement par défaut d'ensembles d'index de liens utilise la clé d'objet cible, ce qui facilite les recherches dichotomiques et la mise en ordre des listings.

La structure de passerelle qui permet de mettre en correspondance un modèle d'un métamodèle avec un autre met en oeuvre en fait une hiérarchie de boucles qui utilisent des itérateurs pour inspecter chaque objet primaire d'un modèle et ensuite parcourent ses liens ou utilisent des clés étrangères pour trouver des objets associés. Les autres traitements qui modifient un modèle NIM, soit déjà implanté soit copié, utilisent ce même type de traitement général pour le contrôle d'intégrité et d'autres opérations de service.

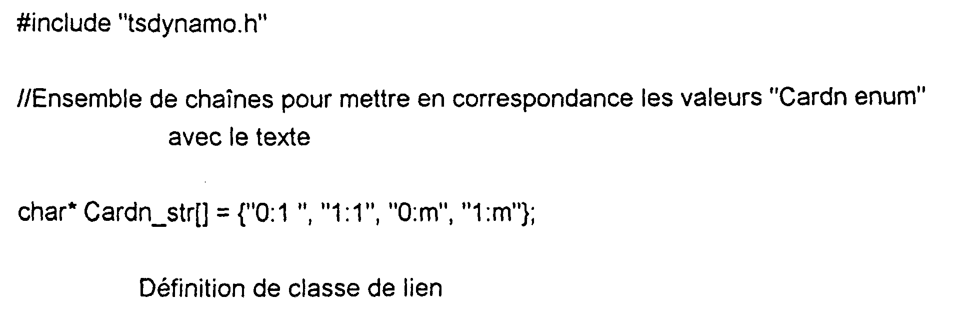

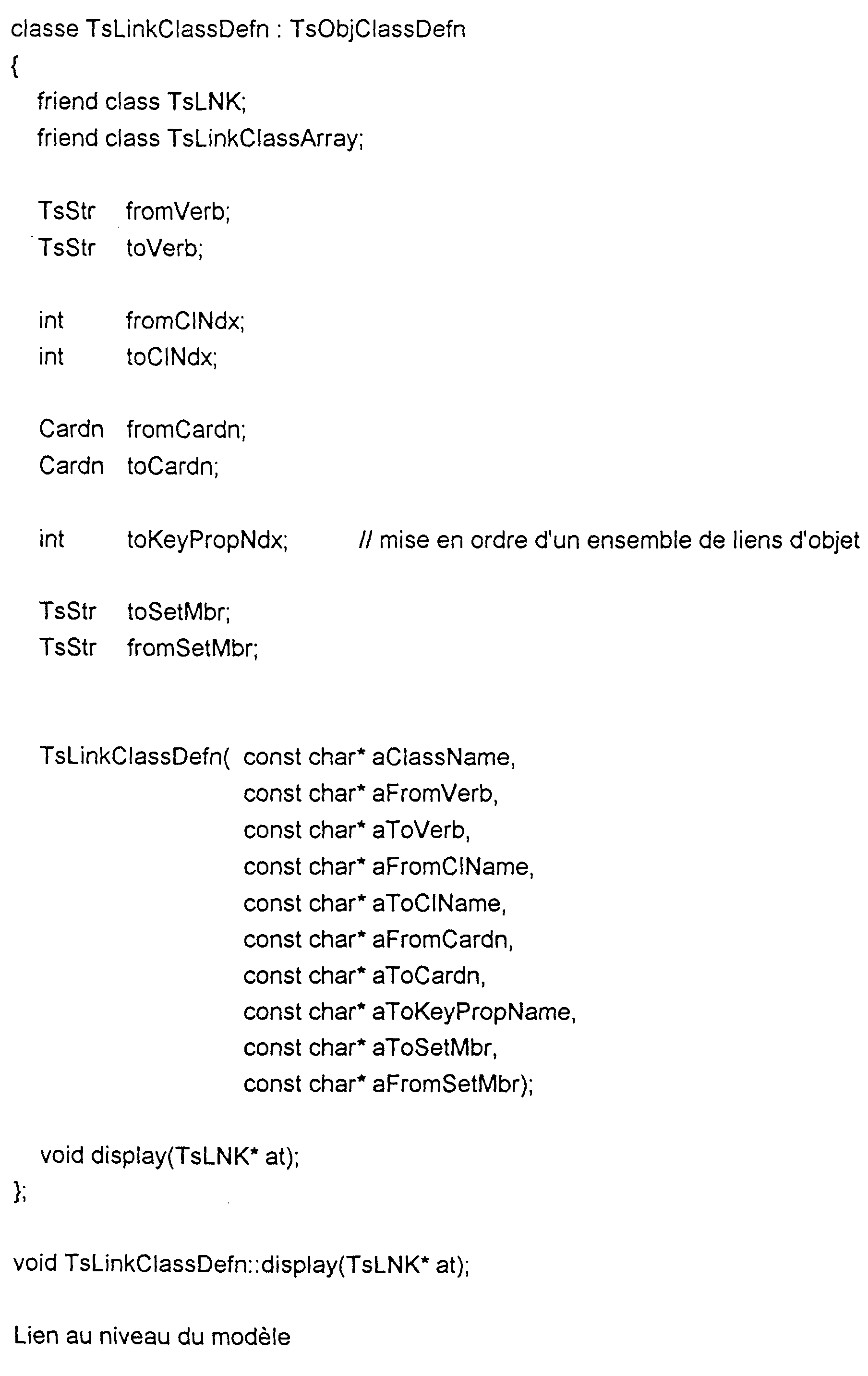

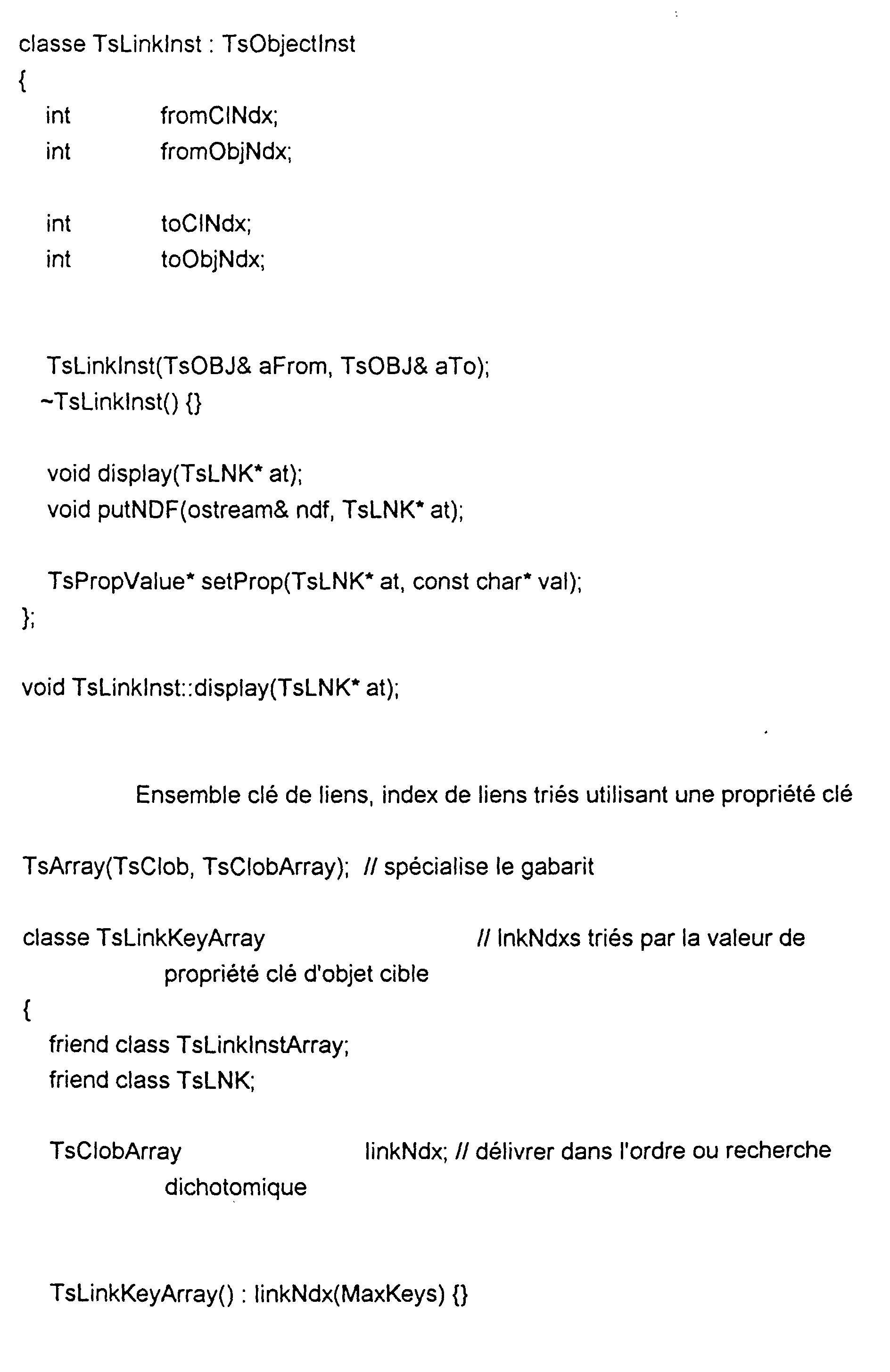

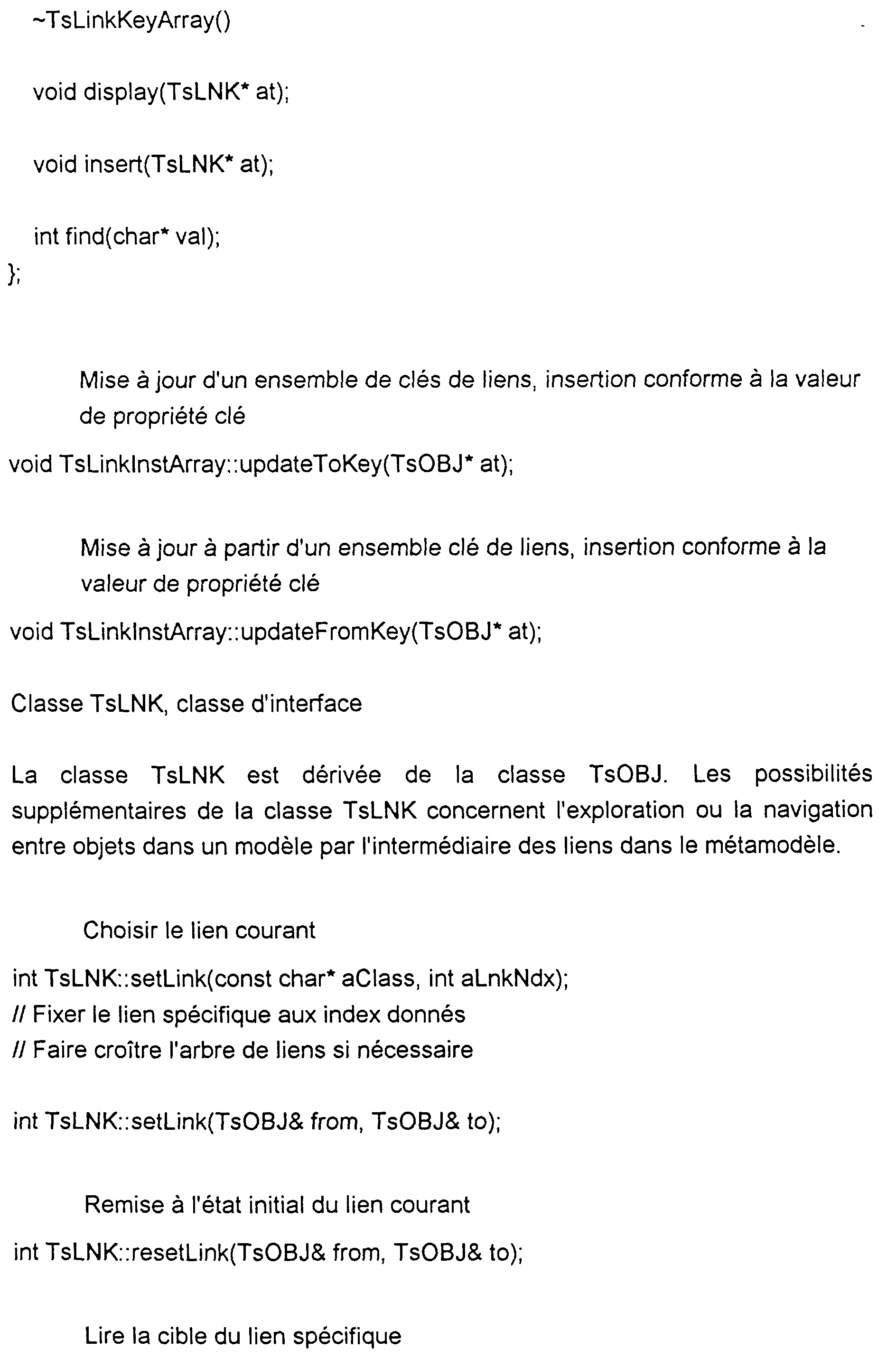

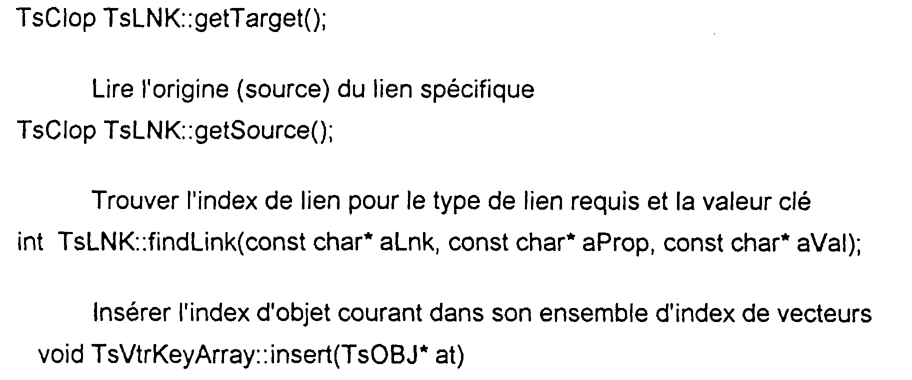

Insérer l'index d'objet courant dans son ensemble d'index de vecteurs
void TsVtrKeyArray::insert(TsOBJ* at)

II est à présent proposé des définitions de classes relatives au codage et décodage des enregistrements dans différents formats de fichiers d'export d'outils.

### Descripteurs d'enregistrement pour des champs de longueur variable

Les langages C et C++ ne permettent pas de supporter complètement les enregistrements. Ils proposent des ensembles de caractères et des structures avec des éléments de données tels que des ensembles de caractères et des sous-structures. Après qu'une structure a été déclarée, le programmeur doit coder l'information de longueur de nouveau dans le code procédural pour pouvoir accéder à ses contenus. Des champs de longueur variable qui utilisent des délimiteurs sont, de manière typique, traités par codage de la syntaxe des enregistrements dans le code qui effectue l'analyse syntaxique desdits enregistrements. La solution avantageuse présentée et définie dans le présent cas est de mettre en oeuvre des déclarations d'enregistrements comme une collection de descripteurs de champs. En premier lieu, le programmeur définit des champs de taille fixe et variable et affecte des codes de valeur constante aux types d'enregistrements, ainsi que des valeurs de délimiteurs. Ensuite dans le code procédural, le programmeur appelle des fonctions pour mettre en correspondance un enregistrement avec son descripteur, puis accède aux champs dans l'enregistrement. Pour sortir les informations, le programmeur appelle des fonctions qui permettent de supprimer l'enregistrement, de remplir ses champs et ensuite de fournir l'enregistrement complet pour sa sortie. La description d'enregistrement contient le nom, le type et la taille de l'information au moment de l'exécution. L'information descriptive et les données peuvent être affichées pour la mise au point.

Avec la classe TsRec, le fichier tsrec.h définit des macros pour la construction des descripteurs d'enregistrement et des prototypes de fonctions pour la mise en correspondance d'un registre avec une description d'enregistrement en fournissant des données provenant d'un champ de l'enregistrement, en fixant des données dans un champ d'enregistrement et en fournissant un enregistrement complet pour permettre de le sortir.

La classe TsRec peut ainsi traiter un grand nombre de fichiers du mécanisme D et de fichiers d'export d'outil écrits et lus par les composants de la passerelle.

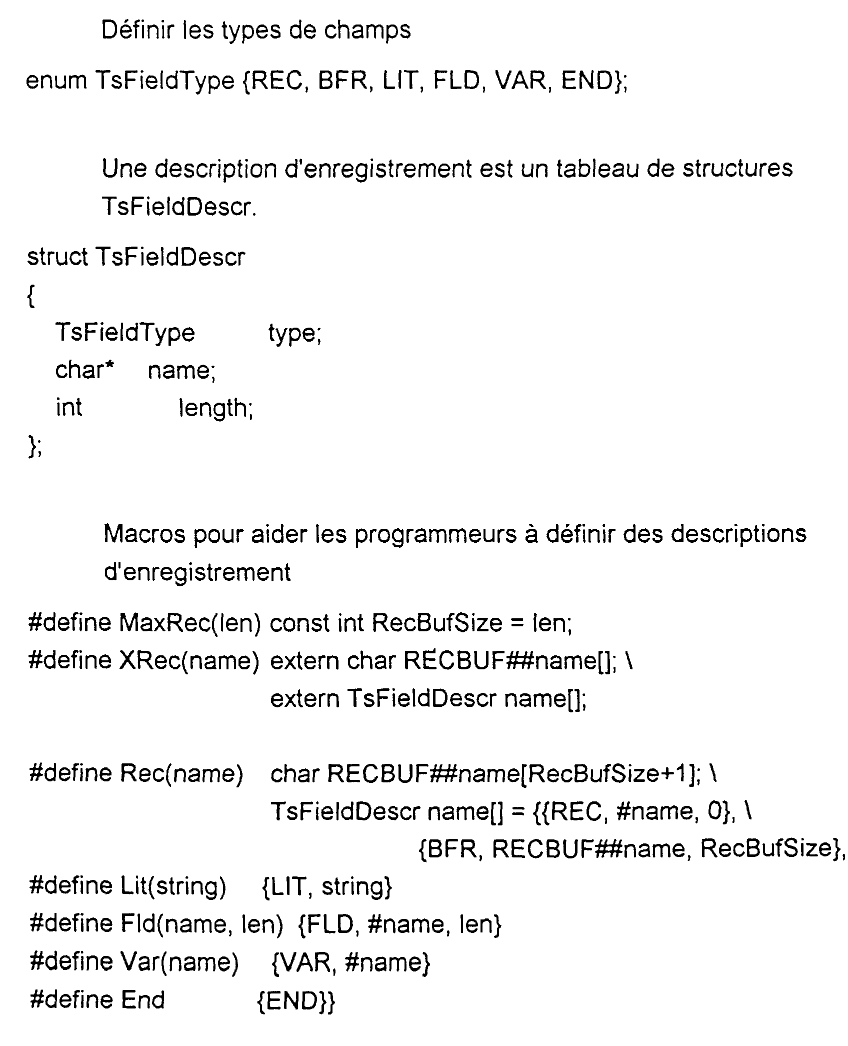

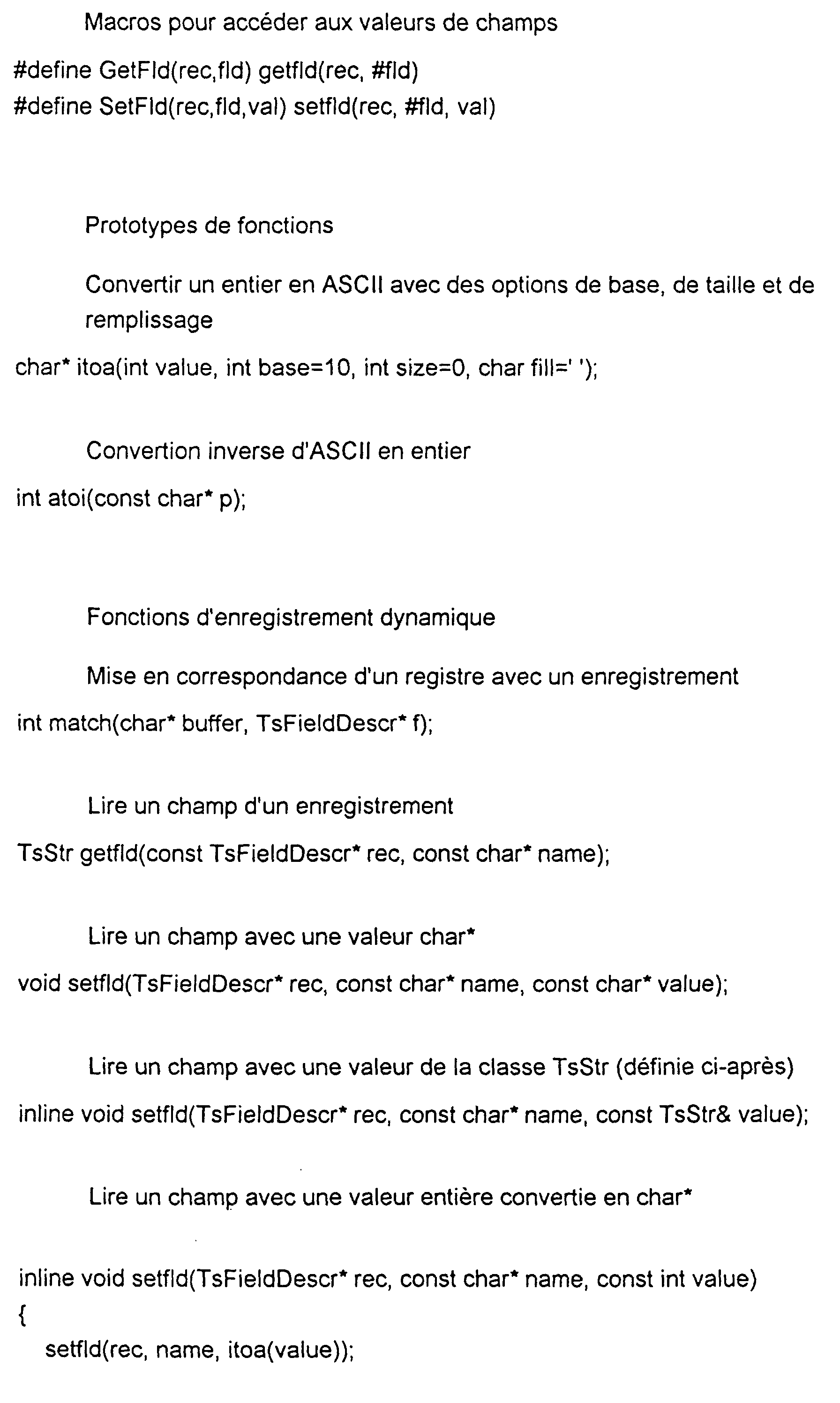

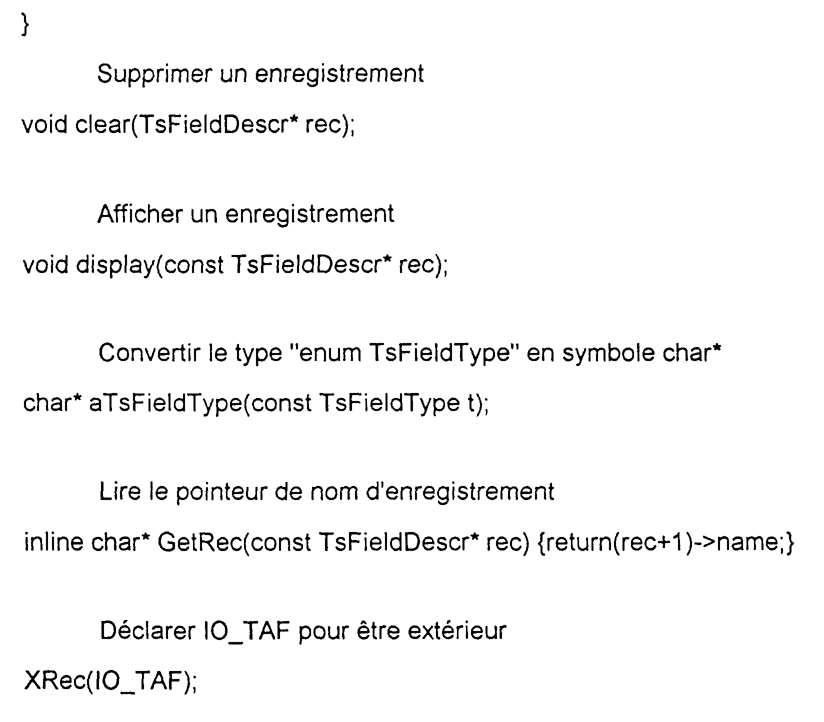

Il est aussi proposé des définitions de classes relativement à la manipulation de chaînes de caractères.

### Définition de la classe de chaînes de caractères TsStr

Le fichier en-tête tsstr.h contient les définitions de la classe TsStr qui fournit un type de données de chaînes de caractères particulièrement avantageux car il se comporte comme beaucoup de types de données intégrés en langage C. De grande importance est également le fait d'interdire toute perte d'information généralement associée à des pertes de blocs de mémoire.

Le but de la classe TsStr est de définir une classe de chaînes de caractères C++ qui permet de supporter les affectations, les concaténations et les opérateurs de comparaison avec les fonctions de sous-chaîne et de réaffectation dynamique de mémoire tout en conservant la compatibilité avec les chaînes de caractères char* d'un langage de type C.

Nouvelles macros de caractères de ligne

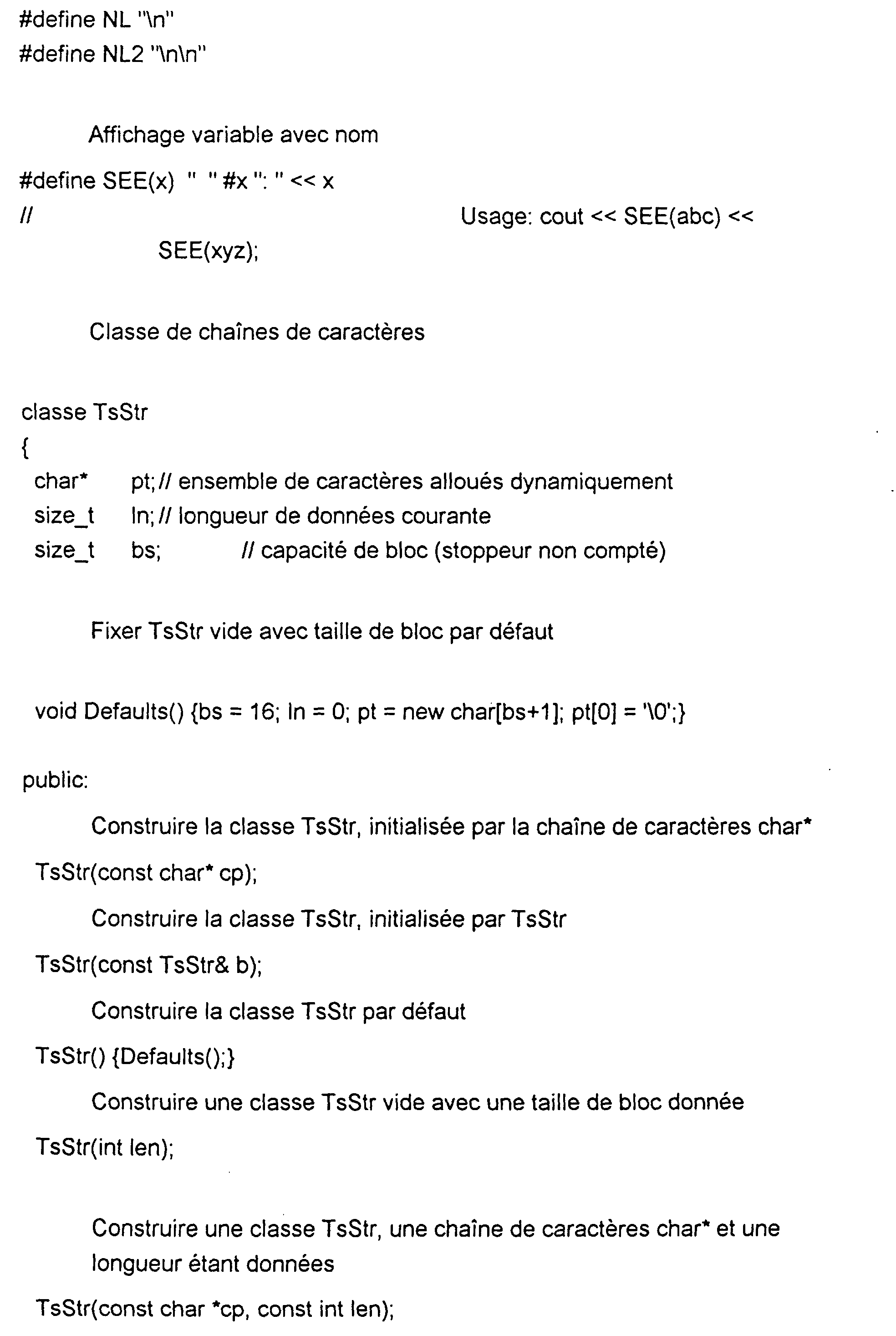

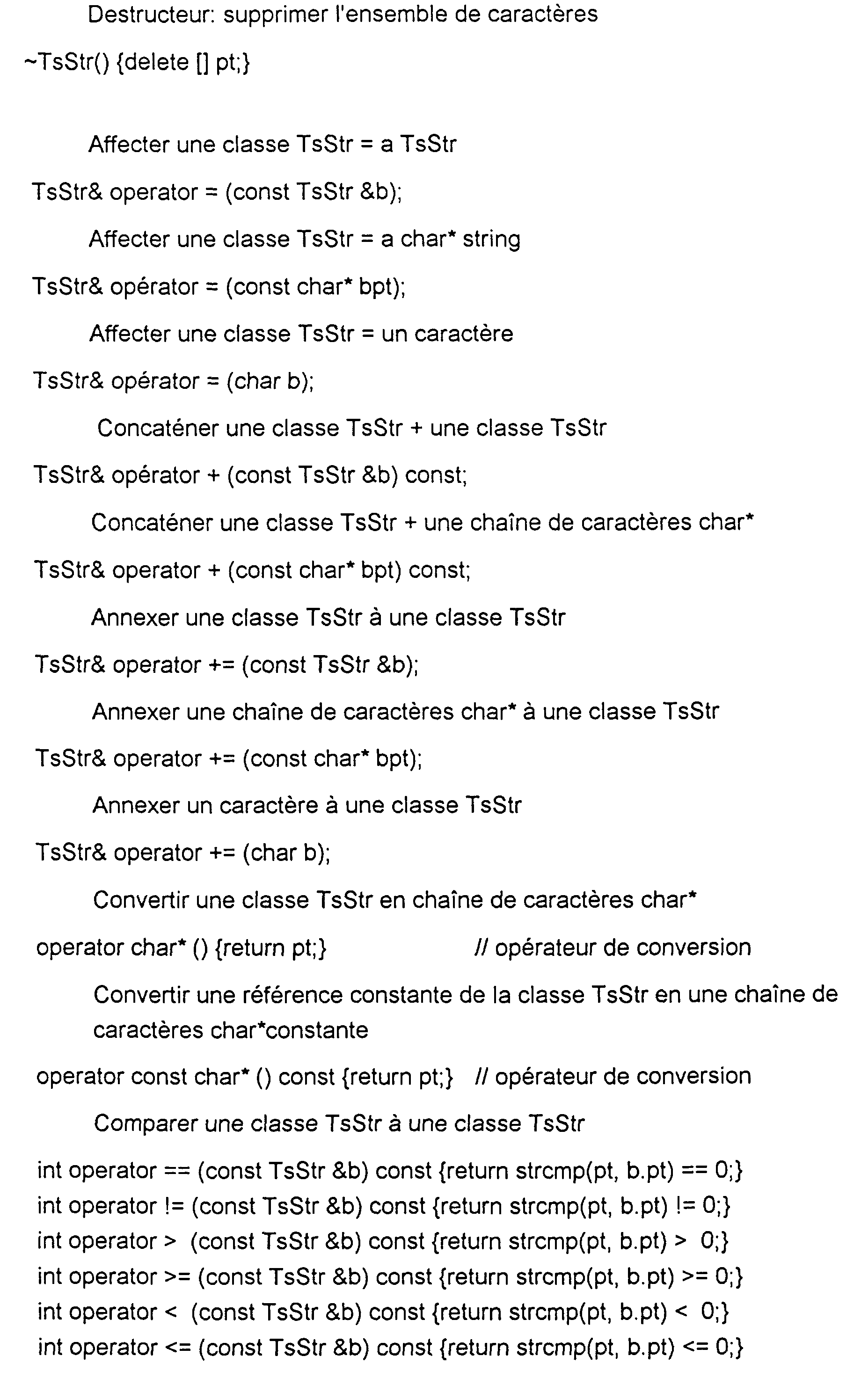

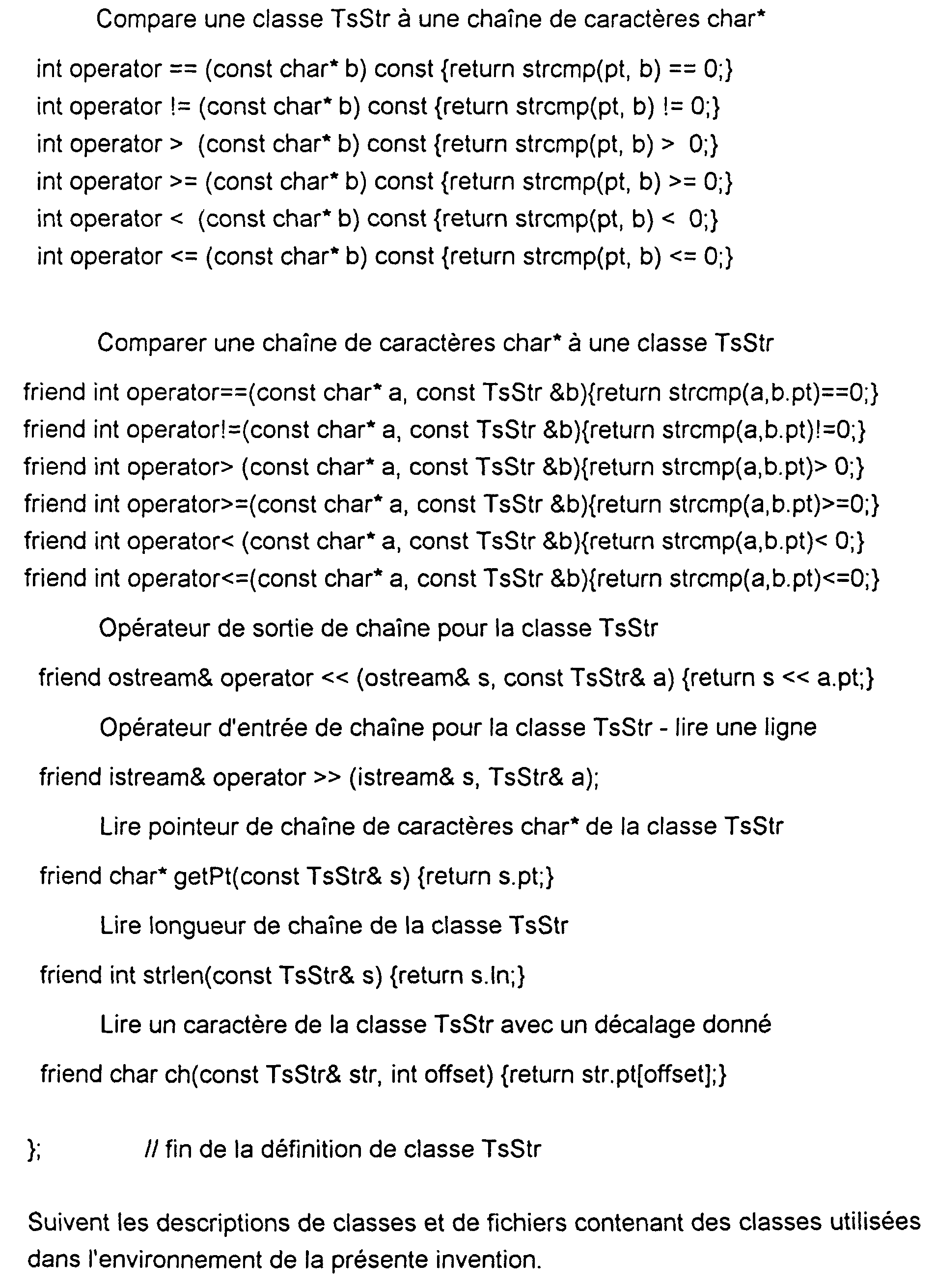

Suivent les descriptions de classes et de fichiers contenant des classes utilisées dans l'environnement de la présente invention.

### Définitions de la classe d'entrée/sortie TsFile

Le fichier en-tête tsfile.h contient les définitions des classes TsFile, TsFileReader, TsFileWriter, TsDataReader et TsDataWriter. Ces classes permettent d'encapsuler des opérations d'entrée/sortie du fichier.

La classe TsFile permet d'encapsuler les appels du système UNIX (marque déposée licenciée exclusivement par l'intermédiaire de X/OPEN Company Ltd) qui exploitent un pointeur de fichier, l'ouverture et la fermeture du fichier étant traitées par les constructeurs et les destructeurs, la tâche du demandeur est considérablement simplifiée.

Les autres classes construites avec cette encapsulation offrent la possibilité de lire et d'écrire une ligne à la fois et donc un fichier entier à la fois.

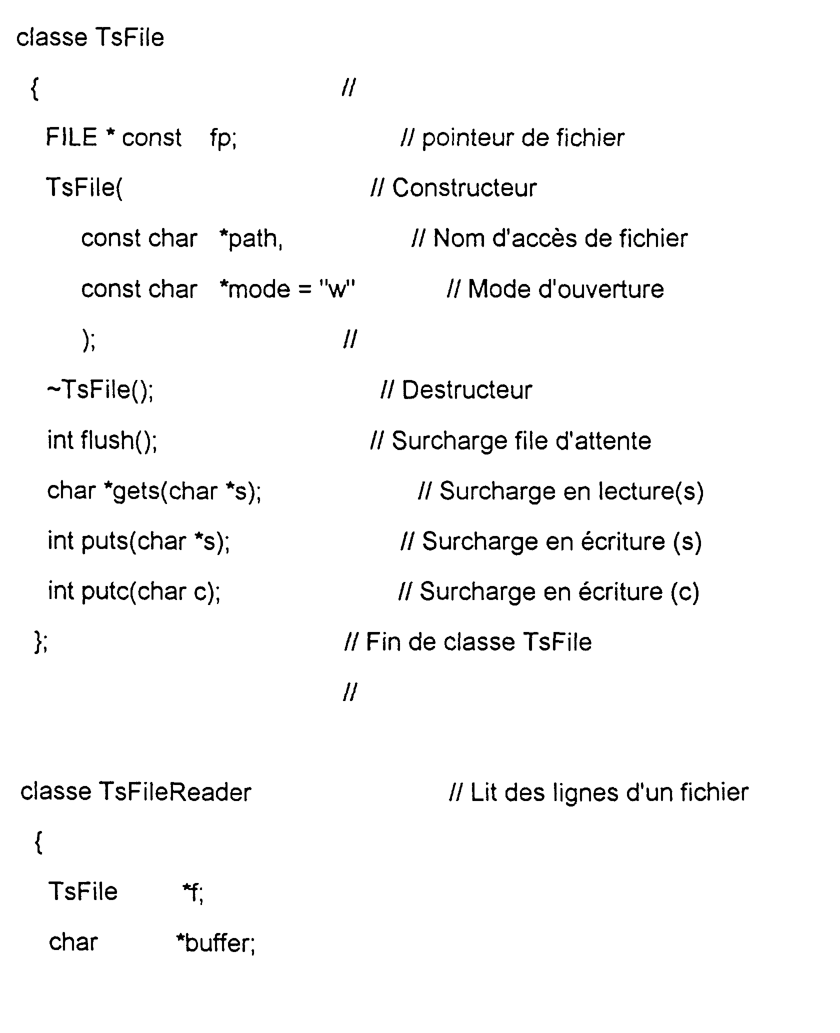

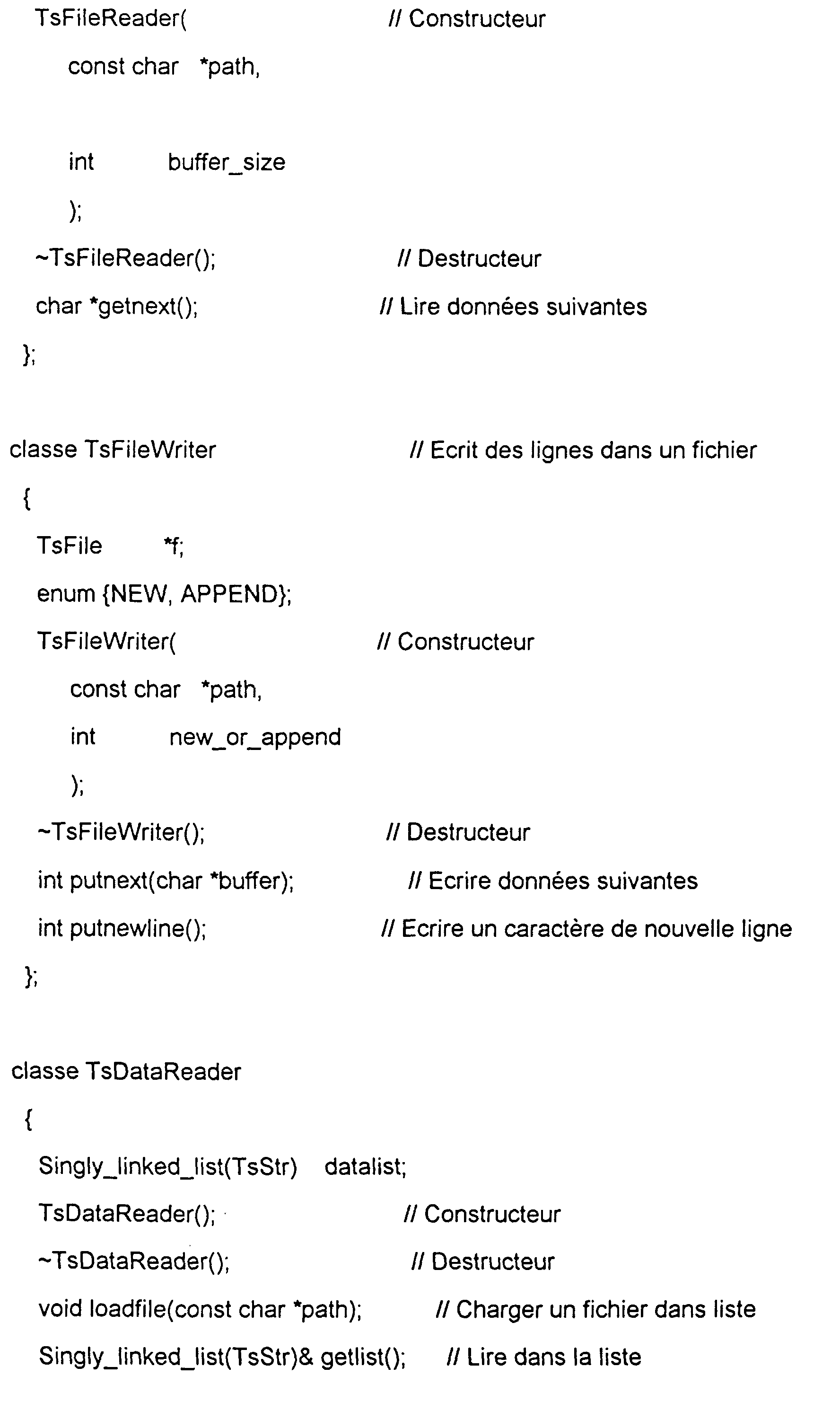

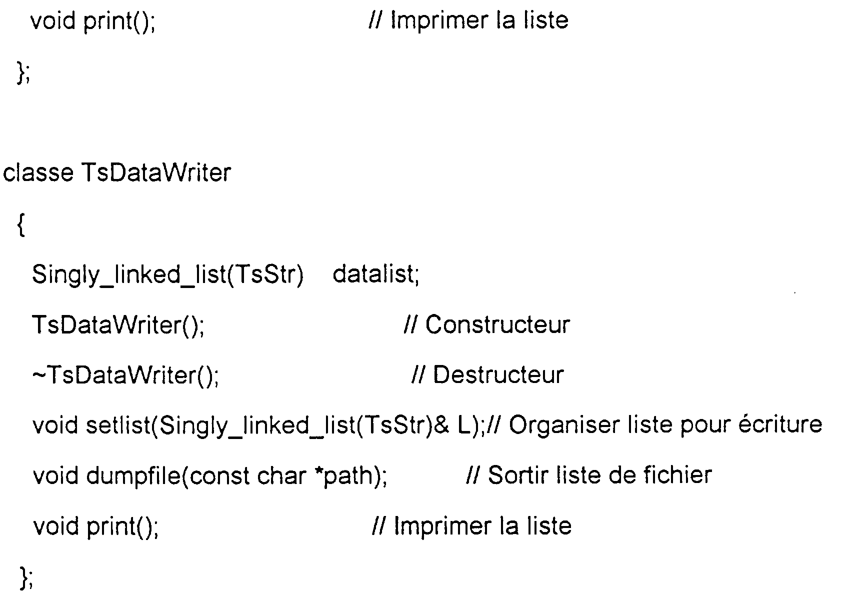

En ce qui concerne le fichier de données neutre NDF, son format permet de stocker un modèle de manière séquentielle. Le fichier NDF peut représenter des modèles sous la forme d'un modèle d'information neutre NIM ou d'un métamodèle d'outil. Le fichier NDF permet de préserver les classes, les objets, les propriétés et les coordonnées des lignes de la représentation d'un modèle avec les valeurs de propriétés.

Les objets du mécanisme D (appelés objets dynamo) possèdent des fonctions d'écriture dans le fichier NDF qui permettent de stocker un modèle. La possibilité d'édition à la demande de fichiers NDF s'avère utile pour la génération de données de test. Le format NDF est commode pour évaluer les résultats lors d'exécutions de test. Les développeurs de passerelles peuvent utiliser des fichiers NDF pour sauvegarder ou évaluer des résultats et poursuivre ou relancer des tests en différents points intermédiaires lors du traitement de passerelles.

Registre de fichier d'entrée pour l'analyse syntaxique de texte.

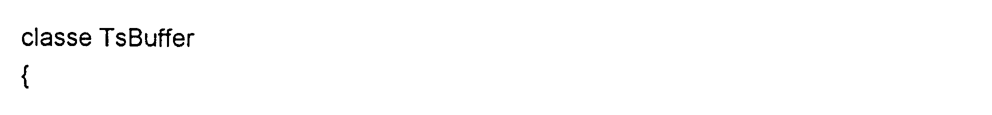

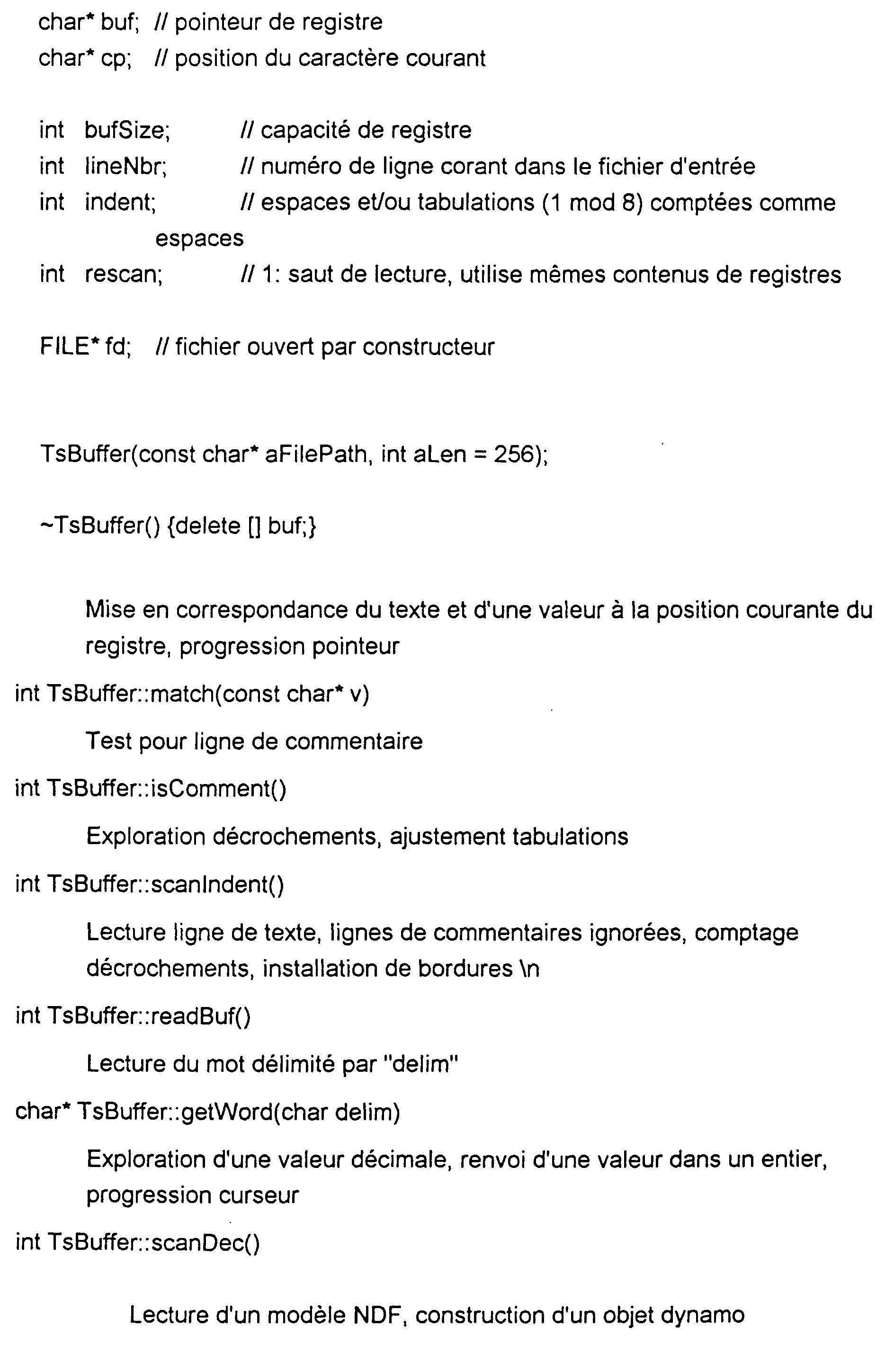

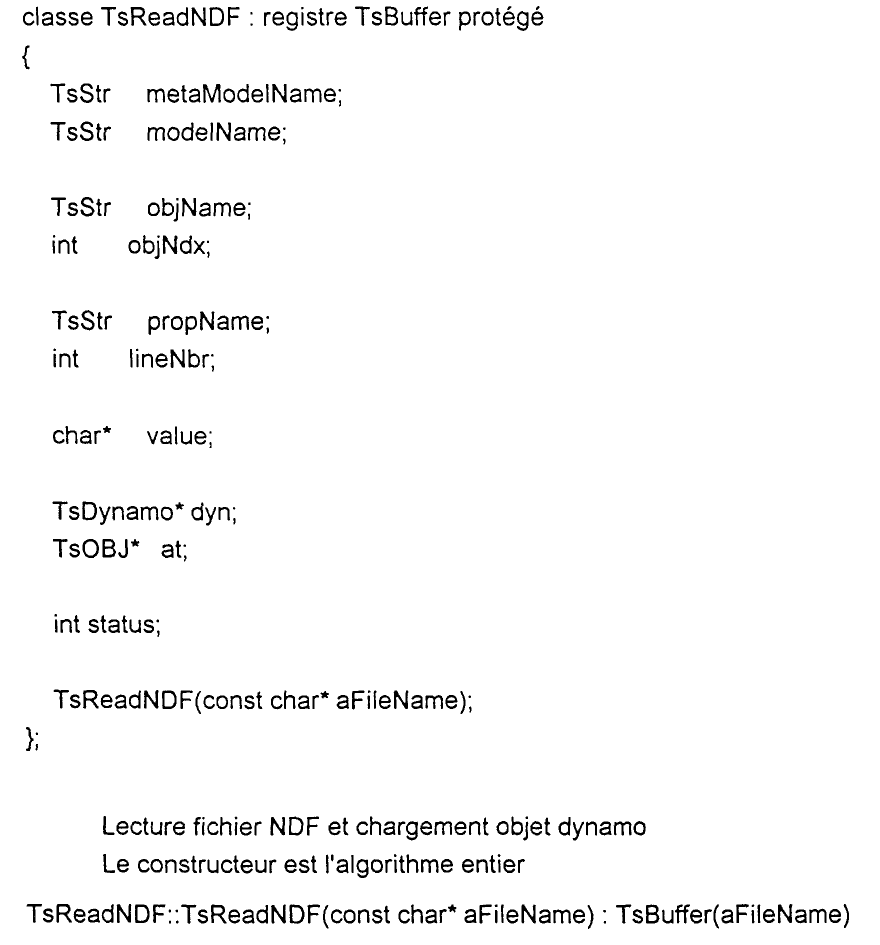

Syntaxe du fichier NDF

Dans la syntaxe du fichier NDF, le décrochement indique un emboîtement. Les lignes de commentaires commencent par "*".

### Métamodèle de fichier NDF

Le format suivant du fichier NDF permet de spécifier un métamodèle, un modèle et les objets, propriétés et valeurs ainsi que des liens qui constituent un modèle.

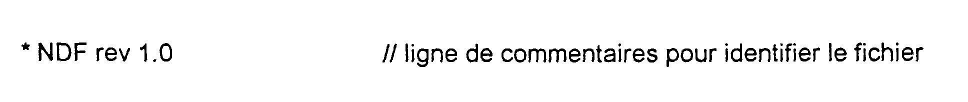

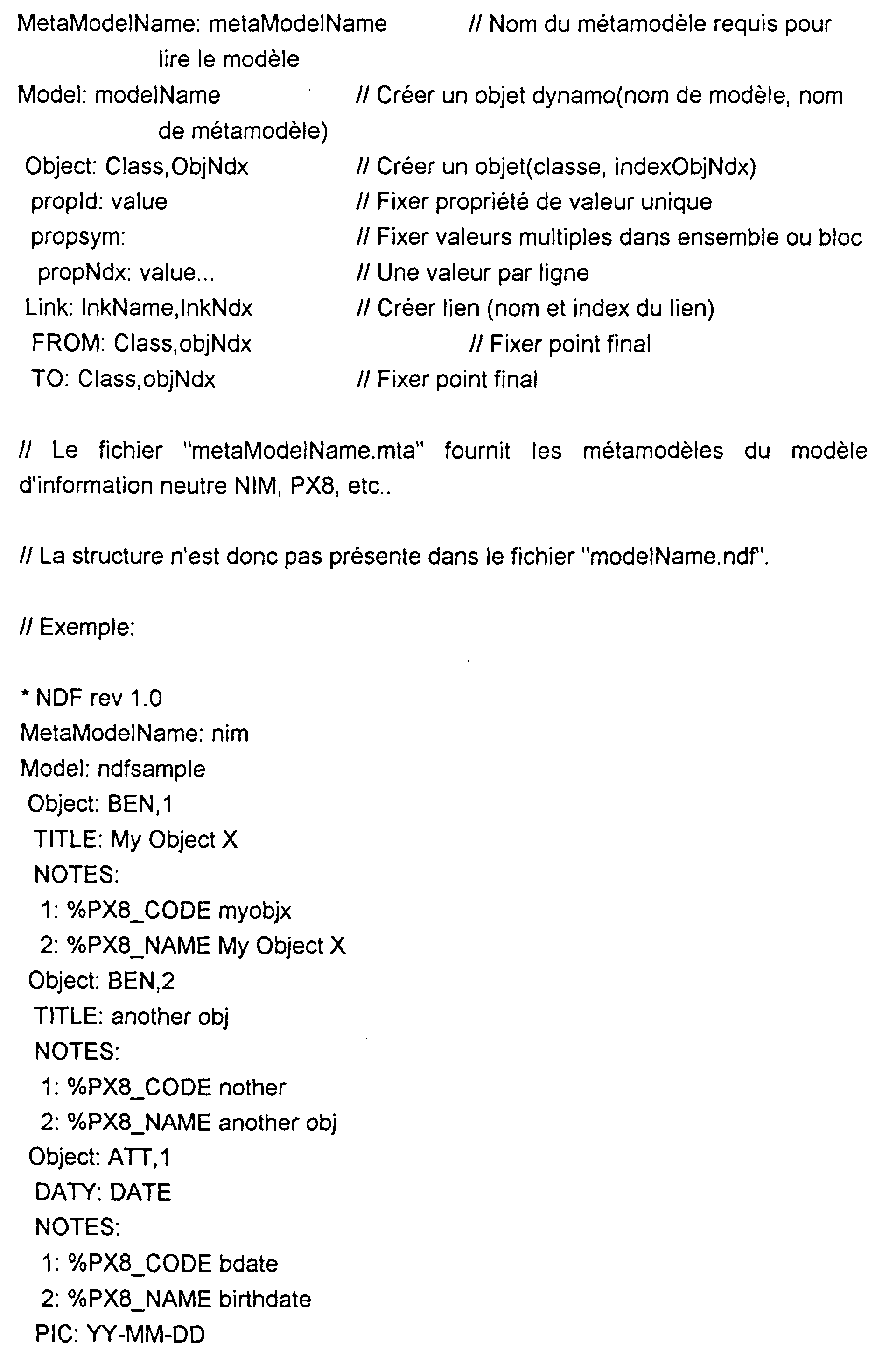

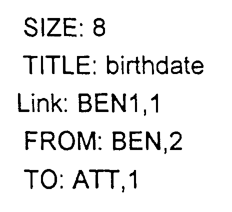

Pour conclure, la description précédente du procédé de manipulation de modèles de données selon l'invention, du fait de l'utilisation d'un langage exécuté (par exemple du type C++) pour la construction de passerelles au lieu d'un langage propriétaire interprété, permet de mettre en évidence les effets techniques avantageux dudit procédé prévu pour être appliqué à une nouvelle technologie autorisant l'interopérabilité d'une pluralité d'outils de génie logiciel. Non seulement tout outil peut être aisément représenté suivant le modèle d'information neutre proposé, mais également toute représentation de modèle interne peut être réalisée, ceci permet à un utilisateur de conserver son propre modèle d'information pour la représentation interne de ses données de développement ou d'exploiter tous les standards de l'industrie comme par exemple le format d'échange de données (CDIF) conçu pour les différents outils de génie logiciel (CASE) associés à un référentiel commun. Le caractère de réutilisabilité du code est pleinement mis à profit et permet ainsi de satisfaire aux contraintes relatives aux délais de mise sur le marché de telles passerelles, alors que les temps et coût de développement desdites passerelles sont très significativement réduits puisque les librairies de code sont réutilisables. De même, est offerte une grande simplification de toute procédure d'ajout de nouveaux composants de passerelles pour faire évoluer et finement adapter un processus de transfert d'un modèle aux besoins spécifiques d'un client. Les performances sont très sensiblement améliorées par le fait que le présent procédé peut être considéré comme l'application d'un simple et unique exécutable.

## Revendications

1. Procédé de manipulation de modèles de données pour le transfert desdits modèles entre une pluralité d'outils de génie logiciel et pour l'application à un dit modèle, de règles de transformation, la transformation de modèles de données étant réalisée au moyen de passerelles permettant de convertir le format d'un outil dans le format d'un autre outil en passant par un format intermédiaire neutre et unique, **caractérisé en ce que** l'élaboration des passerelles est, selon une approche dite orientée objet, réalisée à partir d'un langage exécuté, les passerelles étant des exécutables permettant la transformation d'un modèle de données en plusieurs étapes activées successivement, de manière systématique ou conditionnelle, grâce à un langage de commande décrivant une logique d'enchaînement dynamique des étapes, l'enchaînement étant une procédure paramétrée et nommée, chaque étape étant un exécutable dont le code est développé à partir d'un ensemble de classes réutilisables et l'activation d'une procédure nécessitant simplement de fournir le nom et les paramètres de la procédure correspondante.

2. Procédé de manipulation de modèles de données selon la revendication 1, **caractérisé en ce que**, pour le développement d'une passerelle, il est créé une classe réutilisable permettant de représenter les modèles et méta-modèles stockés en mémoire dans un référentiel ou dans un fichier externe en utilisant une allocation dynamique des objets de modélisation, les objets de cette classe intégrant un ensemble de structures de mémoire et fournissant des fonctions pour manipuler les données d'un modèle chargé en mémoire.

3. Procédé de manipulation de modèles de données selon les revendications 1 et 2, **caractérisé en ce que**, pour le développement d'une passerelle, il est créé une classe réutilisable permettant de coder et décoder différents formats de fichiers d'export d'outils, cette classe encapsulant les enregistrements d'export d'outil et étant utilisée pour décrire les formats d'enregistrement d'un fichier d'import, alors qu'à l'initialisation, tandis que le métamodèle d'un outil est lu à l'aide de la classe de représentation des modèles et métamodèles stockés en mémoire à partir d'un fichier de texte, le code de la passerelle permet de lire le fichier d'export d'outil, d'accéder aux champs propres aux enregistrements et de créer les objets et leurs propriétés en utilisant les fonctions de la classe de représentation des modèles et métamodèles stockés en mémoire.

4. Procédé de manipulation de modèles de données selon l'une quelconque des revendications 1 à 3, **caractérisé en ce que**, pour le développement d'une passerelle, il est créé une classe réutilisable de manipulation de chaînes de caractères qui permet de prendre en charge les affectations, les concaténations et les opérateurs de comparaison avec les fonctions de sous-chaîne et de réaffectation dynamique de mémoire tout en conservant la compatibilité avec les chaînes de caractères d'un langage de type C.

## Patentansprüche

1. Datenmodell-Handhabungsverfahren für die Übertragung von Modellen zwischen mehreren Software-Engineering-Werkzeugen und für die Anwendung von Transformationsregeln auf ein solches Modell, wobei die Transformation der Datenmodelle mittels Gateway-Programmen verwirklicht ist, die die Umsetzung des Formats eines Werkzeugs in das Format eines anderen Werkzeugs über ein neutrales und eindeutiges Zwischenformat ermöglichen, **dadurch gekennzeichnet, daß** die Ausführung der Gateway-Programme auf einem sogenannten objektorientierten Weg anhand einer ausgeführten Sprache erfolgt, wobei die Gateway-Programme ausführbare Programme sind, die die Transformation eines Datenmodells in mehreren nacheinander aktivierten Schritten systematisch oder bedingt kraft einer Befehlssprache ermöglichen, die eine dynamische Verkettungslogik der Schritte beschreibt, wobei die Verkettung eine parametrisierte und benannte Prozedur ist, wobei jeder Schritt ein ausführbares Programm ist, dessen Code anhand einer Gesamtheit von wiederverwendbaren Klassen entwickelt wird und die Aktivierung einer Prozedur einfach die Angabe des Namens und der Parameter der entsprechenden Prozedur erfordert.

2. Datenmodell-Handhabungsverfahren nach Anspruch 1, **dadurch gekennzeichnet, daß** für die Entwicklung eines Gateway-Programms eine wiederverwendbare Klasse erzeugt wird, die die Darstellung der Modelle und Meta-Modelle, die in einem referentiellen Mittel oder in einer externen Datei unter Verwendung einer dynamischen Zuweisung der Modellierungsobjekte gespeichert sind, ermöglicht, wobei die Objekte dieser Klasse eine Gesamtheit von Speicherstrukturen integrieren und Funktionen liefern, um die Daten eines in den Speicher geladenen Modells zu handhaben.

3. Verfahren zur Handhabung von Datenmodellen nach Anspruch 1 und 2, **dadurch gekennzeichnet, daß** für die Entwicklung eines Gateway-Programms eine wiederverwendbare Klasse erzeugt wird, die die Codierung und Decodierung verschiedener Formate von Werkzeugexportdateien ermöglicht, wobei diese Klasse die Werkzeugexport-Aufzeichnungen enthält und verwendet wird, um die Aufzeichnungsformate einer Importdatei zu beschreiben, wohingegen bei der Initialisierung während des Lesens des Meta-Modells eines Werkzeugs mit Hilfe der Klasse der Darstellung der im Speicher gespeicherten Modelle und Meta-Modelle anhand einer Textdatei der Code des Gateway-Programms ermöglicht, die Werkzeugexportdatei zu lesen, auf die für Aufzeichnungen vorgesehenen Felder zuzugreifen und die Objekte und ihre Eigenschaften zu erzeugen, indem die Funktionen der Klasse der Darstellung der im Speicher gespeicherten Modelle und Meta-Modelle verwendet werden.

4. Verfahren zur Handhabung von Datenmodellen nach einem der Ansprüche 1 bis 3, **dadurch gekennzeichnet, daß** für die Entwicklung eines Gateway-Programms eine wiederverwendbare Klasse zur Handhabung von Zeichenketten erzeugt wird, die die Ausblendung der Zuordnungen, der Verknüpfungen und der Operatoren für den Vergleich mit den Unterketten-Funktionen sowie die dynamische Speicher-Neuzuordnung unter Beibehaltung der Kompatibilität mit den Zeichenketten einer Sprache des Typs C ermöglicht.

## Claims

1. Method of manipulating data models for the transfer of said models among a plurality of software engineering tools and for the application of transformation rules to one said model, the transformation of data models being performed by means of gateways allowing the format of one tool to be converted into the format of another tool while passing via a unique neutral intermediate format, **characterised in that**, in what is known as an object-oriented approach, the development of the gateways is performed on the basis of an executed language, the gateways being executables permitting the transformation of a data model in several steps activated in succession, in a systematic or conditional manner, by means of a command language describing a logic for dynamic concatenation of the steps, concatenation being a named procedure with assigned parameters, each step being an executable for which the code is developed on the basis of a set of reusable classes and the activation of a procedure simply requiring the name and parameters of the corresponding procedure to be supplied.

2. Data model manipulation method according to Claim 1, **characterised in that**, for the development of a gateway, a reusable class is created that allows the models and metamodels stored in memory to be represented in a repository or in an external file using dynamic allocation of the modelling objects, the objects in this class incorporating a set of memory structures and supplying functions for manipulating the data of a model loaded in memory.

3. Data model manipulation method according to Claims 1 and 2, **characterised in that**, for the development of a gateway, a reusable class is created that makes it possible to encode and decode different tool-export file formats, this class encapsulating recorded tool exports and being used to describe the recording formats of an import file whereas, on initialisation, while the metamodel of a tool is read with the aid of the class representing the models and metamodels stored in memory on the basis of a text file, the code of the gateway makes it possible to read the tool export file, to access the fields specific to the records and to create the objects and their properties by using the functions of the class representing the models and metamodels stored in memory.

4. Data model manipulation method according to any one of Claims 1 to 3, **characterised in that**, for the development of a gateway, a reusable class is created for manipulating character strings, which makes it possible to look after allocation, concatenation and operators for comparison with the substring and dynamic memory reallocation functions while preserving compatibility with the character strings of a C-type language.
